(19) Europäisches Patentamt / European Patent Office / Office européen des brevets

(11) EP 1 806 937 B1

(12) **EUROPEAN PATENT SPECIFICATION**

(45) Date of publication and mention of the grant of the patent:
**15.12.2010 Bulletin 2010/50**

(21) Application number: **04792967.4**

(22) Date of filing: **26.10.2004**

(51) Int Cl.:
***H04W 88/06*** *(2009.01)* ***H04B 1/38*** *(2006.01)*

(86) International application number:
**PCT/JP2004/015846**

(87) International publication number:
**WO 2006/046283 (04.05.2006 Gazette 2006/18)**

(54) **WIRELESS MOBILE STATION APPARATUS AND COMMUNICATION SWITCHING DECIDING METHOD**

DRAHTLOSE MOBILSTATIONSVORRICHTUNG UND KOMMUNIKATIONS-VERMITTLUNGS-ENTSCHEIDUNGSVERFAHREN

APPAREIL DE STATION MOBILE SANS FIL ET PROCEDE DE DECISION DE LA COMMUTATION DE LA COMMUNICATION

(84) Designated Contracting States:
**DE FR GB**

(43) Date of publication of application:
**11.07.2007 Bulletin 2007/28**

(73) Proprietor: **MITSUBISHI DENKI KABUSHIKI KAISHA**
**Chiyoda-ku, Tokyo 100-8310 (JP)**

(72) Inventor: **SAKURADA, Hiroshi**
**Mitsubishi Denki K. K.**
**Tokyo 100-8310 (JP)**

(74) Representative: **Pfenning, Meinig & Partner GbR**
**Patent- und Rechtsanwälte**
**Theresienhöhe 13**
**80339 München (DE)**

(56) References cited:
**EP-A- 0 762 791**
**JP-A- 2001 045 566**
**JP-A- 2003 318 765**
**JP-A- 2004 032 319**
**US-A1- 2004 192 221**
**US-B1- 6 185 435**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 806 937 B1

## Description

### Technical Field

The present invention relates to a wireless mobile station apparatus such as a portable telephone terminal, for deciding on switching of wireless communication systems by software (S/W) corresponding to many combinations of wireless communication systems, and to a communication switching deciding method.

### Background Art

In conventional multimode wireless mobile station apparatuses, for example, by performing threshold value judgment on parameters such as electric field strengths or comparing the parameters, switching of modes is decided with respect to combinations of specific communication systems (for example, refer to Patent Document 1).

Patent Document 1: JP-A-09-121376 JP 2003-318765 describes a wireless communication control method for switching current wireless communication based on a certain method automatically to another wireless communication based on the optimum method. While a communication with an external wireless communication device is performed by using a wireless signal transmission/reception unit, the other wireless signal transmission/reception unit executes a standby operation under control of a wireless communication control unit. If the wireless communication method corresponding to the wireless signal transmission transmission/reception unit is judged to be usable for the communication with the external wireless communication device, the optimum communication method between the two is selected by comparing the condition of a communication method for the wireless signal transmission/reception unit with those of the active communication method. The reconstruction of the wireless communication control unit to the selected communication method is executed by a circuit construction software on a storage device and the wireless communication method is thereby switched to the optimum method automatically.

### Disclosure of the Invention

### Problem to be solved by the Invention

In the conventional multimode wireless station apparatuses, the function of deciding the mode switching operation and the transmitting/receiving function are formed in the integral manner. As a result, there is a problem in that the mode switching deciding operations are carried out only among the combinations constructed of the communication systems which are taken into consideration when the wireless mobile station apparatuses is manufactured. Also, in the case where the conventional multimode wireless mobile station apparatuses are operable in correspondence with a large number of communication systems, switching deciding means must be assembled therein in correspondence with a total number of those combined communication systems.

The present invention has been made to solve the above-mentioned problem, and therefore has an object to provide a wireless mobile station apparatus and a communication switching deciding method, which are operable in accordance with combinations constituted of a large number of wireless communication systems while an increase of resources required for a switching deciding means is suppressed.

### Means for solving the Problem

Thepresent invention provides a wireless mobile station apparatus, which is equipped with at least a first transmitting/receiving unit and a second transmitting/receiving unit, the first transmitting/receiving unit and the second transmitting/receiving unit each having functions which can be changed by rewriting software, the wireless mobile station apparatus including a control unit for performing alternate switching between a transmitting/receiving function and a communication counterpart station detecting function of a plurality of communication systems by a switching deciding function, to assign the transmitting/receiving function to one of the first and second transmitting/receiving units constantly.

The present invention also provides a communication switching deciding method for a wireless mobile station apparatus equipped with at least a first transmitting/receiving unit and a second transmitting/receiving unit, the first transmitting/receiving unit and the second transmitting/receiving unit each having functions which can be changed by rewriting software, the communication switching deciding method including the step of performing alternate switching between a transmitting/receiving function and a communication counterpart station detecting function of a plurality of communication systems based on switching evaluation data by a switching deciding function to assign the transmitting/receiving function to one of the first and second transmitting/receiving units constantly, in which the switching evaluation data is constituted of an evaluation parameter for predicting a communication quality of a communication system, and both a cutting threshold value and a priority threshold value which are used for deciding on switching between the communication systems.

Effects of the Invention

The wireless mobile station apparatus and the communication switching deciding method according to the present invention produces such an effect that while an increase of resources required for the switching deciding means is suppressed, the wireless mobile station apparatus and the communication switching deciding method are operable in correspondence with combinations of a large number of the wireless communication systems.

Brief Description of the Drawings

[Fig. 1] A diagram for showing an arrangement of a wireless mobile station apparatus according to Embodiment 1 of the present invention.
[Fig. 2] A flow chart for indicating overall operations of the wireless mobile station apparatus according to Embodiment 1 of the present invention.
[Fig. 3] A diagram for representing a switching state of the wireless mobile station apparatus according to Embodiment 1 of the present invention.
[Fig. 4] A diagram for indicating a conceptional idea of a switching decision by the wireless mobile station apparatus according to Embodiment 1 of the present invention.
[Fig. 5] A flow chart for describing a switching deciding operation by a control unit of the wireless mobile station apparatus according to Embodiment 1 of the present invention.
[Fig. 6] A diagram for indicating a conceptional idea of a switching decision by a wireless mobile station apparatus according to Embodiment 2 of the present invention.
[Fig. 7] A flow chart for describing a switching deciding operation by a control unit of the wireless mobile station apparatus according to Embodiment 2 of the present invention.
[Fig.8] A diagram for indicating a conceptional idea of a switching decision by a wireless mobile station apparatus according to Embodiment 3 of the present invention.
[Fig. 9] A flow chart for describing a normalizing operation and a switching deciding operation by a control unit of the wireless mobile station apparatus according to Embodiment 3 of the present invention.

Best Mode for carrying out the Invention

In Embodiment 1, a plurality of sets of switching deciding software is formed for every combination of a communication system before being switched and a communication system after being switched.
Also, in Embodiment 2, an evaluation parameter is normalized for every communication system, and a switching deciding operation is carried out by general-purpose switching deciding software which is commonly used with respect to a combination of different communication systems based on the normalized evaluation parameter.
Furthermore, in Embodiment 3, an evaluation parameter is normalized by general-purpose normalizing software which is commonly used with respect to different communication systems. Also, a switching deciding operation is carried out by general-purpose switching deciding software which is commonly used with respect to a combination of different communication systems based on the normalized evaluation parameter.

Embodiment 1

Referring now to Fig. 1 to Fig. 5, a description is made of a wireless mobile station apparatus according to Embodiment 1 of the present invention. Fig. 1 is a diagram for showing an arrangement of the wireless mobile station apparatus according to Embodiment 1 of the present invention. It should be noted that the same reference numerals shown in the drawings indicate the same or similar structural portions.
In Fig. 1, a wireless mobile station apparatus 1 according to Embodiment 1 is provided with a transmitting/receiving unit 3 connected to an antenna 2, a transmitting/receiving unit 5 connected to an antenna 4, a control unit 6, and a storage unit 7. The control unit 6 controls switching operations of software of both the transmitting/receiving unit 3 and the transmitting/receiving unit 5. The storage unit 7 stores thereinto software which is used to change functions of the transmitting/receiving unit 3 and the transmitting/receiving unit 5.
In the storage unit 7, a pluralityof sets of the following software have been stored. That is, a plurality of sets of "transmitting/receiving software" which correspond to various sorts of wireless communication systems respectively and are used to transmit/receive in the various sorts of communication systems have been stored, a plurality of sets of "communication counterpart station detecting software" which correspond to the various sorts of wireless communication systems respectively and are used to detect communication counterpart stations in the various sorts of wireless communication systems have been stored, and a plurality of sets of "switching deciding software" which correspond to a combination of two communication systems among the various sorts of wireless communication systems and are used to decide on switching of a communication system in the combination of the two communication systems have been stored.

Next, operations of the wireless mobile station apparatus according to Embodiment 1 will now be described with reference to drawings. Fig. 2 is a flow chart for indicating overall operations of the wireless mobile station apparatus according to Embodiment 1 of the present invention. Fig. 3 is a diagram for representing a switching state of the wireless mobile station apparatus according to Embodiment 1 of the present invention.

First, entire operations of the wireless mobile station apparatus will now be explained. The control unit 6 reads out transmitting/receiving software (S/W) corresponding to a first communication system, and writes the read transmitting/receiving software (S/W) into the transmitting/receiving unit 3. Next, the control unit 6 initiates the transmitting/receiving unit 3 so as to start a transmitting/receiving operation based on the first communication system (step S101).

Next, the control unit 6 reads out communication counterpart station detecting software (S/W) for detecting (searching) a communication counterpart station based on a second communication system from the storage unit 7, and writes the read communication counterpart station detecting software (S/W) into the transmitting/receiving unit 5, and initiates the transmitting/receiving unit 5 so as to start a searching operation (steps S102 and S103).

Next, switching deciding software is read from the storage unit 7 in the control unit 6 so as to initiate the control unit 6, while the switching deciding software decides on switching of the communication system in the combination made of the first communication system and the second communication system. The switching deciding software within the control unit 6 receives evaluation parameters which are utilized as indexes for switching the communication system from the transmitting/receiving unit 3 and the transmitting/receiving unit 5, respectively, and thus decides on the switching of the communication system (step S104).

In the case where the switching operation to the second communication system is selected by the switching decision, the control unit 6 once stops the communication counterpart station detecting software operated by the transmitting/receiving unit 5, and writes transmitting/receiving software (S/W) for performing a transmitting/receiving operation based on the second communication system into the transmitting/receiving unit 5. Next, the control unit 6 initiates the transmitting/receiving unit 5 so as to start a transmitting/receiving operation based on the second communication system (step S105). When the control unit 6 starts the transmitting/receiving operation based on the second communication system in the transmitting/receiving unit 5, the control unit 6 stops the transmitting/receiving operation based on the first communication system in the transmitting/receiving unit 3.

Next, the control unit 6 reads out communication counterpart station detection software (S/W) for detecting a communication counterpart station based on a third communication system from the storage unit 7, and then writes the read detection software into the transmitting/receiving unit 3 (step S106). Next, the control unit 6 initiates the transmitting/receiving unit 3 so as to start a detection of a communication counterpart station based on the third communication system by the initiated transmitting/receiving unit 3 (step S107). As previously explained, in the case where the communication system is switched, the transmitting/receiving function is alternately assigned to the transmitting/receiving unit 3 and the transmitting/receiving unit 5, thereby preventing such a case where there is no communication state.

In the case where a continuation of communications based on the first communication system is selected by a switching deciding operation of the step S104, the control unit 6 stops the transmitting/receiving unit 5 and reads out the communication counterpart station detection software for detecting a communication counterpart station based on the third communication system from the storage unit 7, and then writes the read detection software into the transmitting/receiving unit 5 so as to initiate the transmitting/receiving unit 5. The control unit 6 continues to detect the communication counterpart station in the transmitting/receiving unit 5 in the above-mentioned manner (step S104→5102→S103) . The detection of the communication counterpart station is similarly carried out in the transmitting/receiving unit 3 after the switching deciding operation of the step S108 is performed (step S108→106→S107).

Fig. 3 indicates an example as to conditions of the above-explained switching operations. In Fig. 3, switching conditions are sequentially represented in this order: steps S101→S102→S103,=> steps S104 (switching occurs) →S105→S106→S107, => steps S108 (switching does not occur) →S106→S107, => steps S108 (switching does not occur) →S106→S107, => steps S108 (switching does not occur) →S106→S107.

Now, a switching decision will be described in detail. Fig. 4 is a diagram for indicating a switching decision conceptional idea of the wireless mobile station apparatus according to Embodiment 1 of the present invention.

A switching deciding method is defined for every combination made of a communication system under communication and a communication systemof a switching destination. As a consequence, switching deciding software (S/W) is formed in correspondence with the combination of two communication systems, namely the communication system under communication and the communication system of the switching destination.

The communication system of the switching destination is selected in accordance with, for example, the below-mentioned manner. That is, firstly, the control unit 6 accesses a server on a network by utilizing the communication system under communication, and retrieves a communication system by which a service is provided at a peripheral area of the own apparatus based on positional information of the own apparatus. The control unit 6 selects candidates as to communication systems of several switching destinations based on the positional information, the information of the acquired communication system, a subscription status about a communication service by a user, a priority order of utilization, and the like. The control unit 6 sequentially selects a communication system of a switching destination one by one at random, or in accordance with the priority order from these selected candidates for the communication systems of the switching destinations, and thus detects an actual communication counterpart station.

When one communication system of the switching destination is selected in the above-explained selecting manner, the control unit 6 initiates the communication counterpart station detecting software so as to detect the actual communication counterpart station in one of the transmitting/receiving unit 3 and the transmitting/receiving unit 5.

Also, the control unit 6 initiates the switching deciding software (S/W) for the switching decision, and decides whether a communication sequence is to be switched or whether the communication is to be continued based on a communication systemunder communication based on an evaluation parameter "A" in the communication system (for example, first communication system) under communication and an evaluation parameter "B" in the communication system (for instance, second communication system) of the switching destination which are obtained from the transmitting/receiving units 3 and 5. In this case, switching evaluation data corresponds to evaluation parameters used to predict qualities of communications, a cutting threshold value and a priority threshold value used in a switching decision, and a priority order of a communication system. The communication qualities are electric power, a ratio of electric power to noise, an error ratio, and the like, which are defined with respect to, for example, each of the communication systems.

A large/small relationship between the cutting threshold value and the priority threshold value differs from each other, depending upon a characteristic of an evaluation parameter. In the case where such a parameter that a larger value is better suited for communication is selected as the evaluation parameter, the below-mentioned large/small relationship is given.

Priority threshold value > Cutting threshold value.

The above-selectedparameter corresponds to the electric power, the ratio of electric power to noise, and the like.

An example shown in Fig. 5 of comparing a threshold value with an evaluation parameter is explained based on the above-explained case. On the other hand, in the case where such a parameter that a smaller value is better suited for communication is selected as the evaluation parameter, the below-mentioned large/small relationship is given:

Priority threshold value < Cutting threshold value. The above-selected parameter corresponds to the error rate, and the like.

In such a case, judging conditions are opposite to each other. The switching decision is carried out in accordance with, for example, the below-mentioned manners.

"Cutting threshold value": In the case where an evaluation parameter of a communication system under communication, or under detection is smaller than this cutting threshold value, a communication by the above-explained communication system is not selected. In the communication system under detection, when such a condition occurs that an evaluation parameter becomes smaller than this cutting threshold value, a continuation of the communication system under communication is selected.

"Priority order": Priority order in utilization of communication systems. The priority order is set by a user of a wireless mobile station apparatus, a manufacturer of the wireless mobile station apparatus, or a wireless communication service and other service providers.

"Priority threshold value": In the case where an evaluation parameter of a communication system whose priority order is higher is equal to or larger than this priority threshold value, a communication based on the communication system having the higher priority order is selected irrespective of a status of a communication system having a lower priority order.

"Evaluation parameter comparison": In the case where a selection of a communication system is not determined by judgment based on either the cutting threshold value or the priority threshold value, the communication system is selected by comparing an evaluation parameter of switching evaluation data of a communication system under communication with that of a communication system under detection.

A switching deciding method is formed as software using an evaluation parameter, a threshold value, a priority order, a conditional expression, and the like. For the sake of easy understanding, the judging conditions of the threshold value are expressed as "smaller than" and "equal to or larger than" in the concrete manner. Alternatively, as previously explained, as to both the cutting threshold value and the priority threshold value, the respective judging conditions may be opposite to each other. Also, a plurality of sets of each of these threshold values may be employed. A judging condition may be alternatively realized by a logical equation obtained by arranging condition judgements related to the plurality of threshold values in a composite manner.

Fig. 5 is a flow chart for describing switching deciding operations executed by the control unit of the wireless mobile station apparatus according to Embodiment 1 of the present invention. The switching deciding operations will now be explained with reference to this flow chart. The switching deciding operations are carried in the case of the step S104 and the case of the step S108 in Fig. 2.

That is, there are two different cases where the switching deciding operation is carried out, namely a case where while a transmitting/receiving operation by a certain communication is carried out in the transmitting/receiving unit 3, a detecting operation of another communication system is carried out by the transmitting/receiving unit 5, and a case where while a transmitting/receiving operation by a certain communication is carried out in the transmitting/receiving unit 5, a detecting operation of another communication system is carried out by the transmitting/receiving unit 3.

Firstly, the control unit 6 requests both the transmitting/receiving unit 3 and the transmitting/receiving unit 5 to acquire evaluation parameters used in switching deciding operations (step S111). Since these evaluation parameters are defined for every communication system, there are some cases that types of evaluation parameters provided from the transmitting/receiving unit 3 and the transmitting/receiving unit 5 are different from each other. The control unit 6 has already read from the storage unit 7, the switching deciding software for deciding on whether or not switching operations are performed based on these evaluation parameters in correspondence with both the evaluation parameters, and therefore, decides on the switching operations by using the switching deciding software.

Next, the control unit 6 judges whether or not an evaluation parameter is smaller than the cutting threshold value as to the communication system under detection (step S112). When the evaluation parameter is smaller than the cutting threshold value, the control unit 6 selects a continuation of a transmitting/receiving operation based on the communication system under communication (step S119).

When the evaluation parameter is equal to or larger than the cutting threshold value in the step S112, or when the cutting threshold value is not defined, the control unit 6 judges whether or not the evaluation parameter is smaller than the cutting threshold value as to the communication system under communication (step S113). When the evaluation parameter is smaller than the cutting threshold value, the control unit 6 selects a sequence under detection, namely a switching operation to the communication system under detection (step S120).

When the evaluation parameter is equal to or larger than the cutting threshold value in the step S113, or when the cutting threshold value is not defined, the control unit 6 performs a comparing judgment as to priority orders of a communication system under communication and of a communication system under detection (step S114). In the case where the priority order of the communication system under communication is higher than that of the communication system under detection, the control unit 6 performs a comparing judgement between the evaluation parameter and the priority threshold value as to the communication system under communication (step S115). In the case where the priority order of the communication system under detection is higher than that of the communication system under communication, the control unit 6 performs a comparing judgement between the evaluation parameter and the priority threshold value as to the communication system under detection (step S116).

In the step S115, when the evaluation parameter of the communication system under communication is equal to or larger than the priority threshold value, the control unit 6 selects a continuation of the transmitting/receiving operation based on the communication system under communication (step S119). When the evaluation parameter of the communication system under communication is smaller than the priority threshold value, or when the priority threshold value is not defined, the control unit 6 performs a comparing operation of the evaluation parameters (step S117).

In the step S116, when the evaluation parameter of the communication system under detection is equal to or larger than the priority threshold value, the control unit 6 selects a switching operation to the communication system under detection (step S120). When the evaluation parameter of the communication system under detection is smaller than the priority threshold value, or when the priority threshold value is not defined, the control unit 6 performs a comparing operation of the evaluation parameters (step S117).

In the steps S117 and S118, the control unit 6 compares the evaluation parameters with each other as to both the communication system under communication and the communication system under detection so as to decide whether the communication system under communication is to be continued, or whether the switching operation to the communication system under detection is to be carried out. The comparing operation of the evaluation parameters corresponds to a software programwhich is constituted by a plurality of evaluation parameters, a calculating formula, a comparing formula, a condition branch, and the like. This evaluation parameter comparing operation is to determine as to whether the communication system under communication is continued, or the communication system under communication is switched to the communication system under detection. For example, the control unit 6 selects the switching operation to the communication system under detection when the comparing result becomes as follows: the evaluation parameter of the communication system under detection > the evaluation parameter of the communication system under communication.

In the step S118, if the switching operation to the sequence under detection is decided, the control unit 6 selects the switching operation to the sequence under detection as the switching decision (step S120). If not, then the control unit 6 selects a continuation of the transmitting/receiving operation based on the communication system under communication (step S119).

As previously explained, the switching deciding methods are formed as the software in correspondence with the combination made of the communication system under communication and the communication system under detection. As a result, the control unit 6 can perform the switching deciding operation which is optimized for each of the switching combinations. Also, after the combination of the communication systems has been determined, only the switching deciding software corresponding to this determined combination is loaded and initiated, so that the used resources such as the used memories in the control unit 6 can be reduced, and further, the time required for loading and initiating the switching deciding software can be reduced.

Embodiment 2

Referring to Fig. 6 and Fig. 7, a wireless mobile station apparatus according to Embodiment 2 of the present invention will be described. Fig. 6 is a diagram for showing a switching deciding conceptional idea of the wireless mobile station apparatus according to Embodiment 2 of the present invention. It should be noted that a structure of hardware (H/W) of the wireless mobile station apparatus according to Embodiment 2 is similar to that of Embodiment 1.

In Embodiment 1, the plurality of pieces of switching deciding software are formed for every combination made of the communication system before being switched and the communication system after being switched. In Embodiment 2, in a case where a total number of combinations made by conceivable communication systems becomes huge, a switching deciding operation is carried out by employing the same general-purpose switching deciding software with respect to combinations made of different communication systems.

In Embodiment 2, evaluation parameters which are different from each other for every communication system are normalized in order that a switching deciding operation can be carried out by way of commonly-used "general-purpose switching deciding software". While "normalizing software" for normalizing an evaluation parameter is formed in correspondence with a communication system, the formed "normalizing software" is stored in the storage unit 7 in combination with either "transmitting/receiving software" or "communication counterpart station detecting software", and then, the "normalizing software" is read out from the storage unit 7 by the control unit 6, and is written into either the transmitting/receiving unit 3 or the transmitting/receiving unit 5 so as to be executed by the control unit 6. In Embodiment 2, the general-purpose switching deciding software which is executed by the control unit 6 is commonly used irrespective of the combination of the communication systems, and this general-purpose switching deciding software may be stored in the storage unit 7, or may be alternatively installed in the control unit 6.

A switching operation of communication sequences for performing transmitting/receiving operation and a detecting sequence using both the transmitting/receiving unit 3 and the transmitting/receiving unit 5 are similar to those of the case of Embodiment 1. In this example, the switching deciding operation in Embodiment 2 is described. Fig. 7 is a flow chart for describing switching deciding operations executed by the control unit of the wireless mobile station apparatus according to Embodiment 2 of the present invention. The switching deciding operations will now be explained with reference to Fig. 7.

Firstly, the control unit 6 requests both the transmitting/receiving unit 3 and the transmitting/receiving unit 5 to acquire normalized evaluation parameters for switching deciding operations (step S211). These normalized evaluation parameters correspond to such parameters which have been normalized as types and values which do not depend upon a communication system. The control unit 6 performs a switching deciding operation based on the normalized evaluation parameters of both the transmitting/receiving units 3 and 5.

Next, the control unit 6 judges whether or not a normalized evaluation parameter is smaller than a cutting threshold value as to a communication system under detection (step S212). The cutting threshold value which is used in this example is a threshold value corresponding to a normalized parameter value. When the normalized evaluation parameter is smaller than the cutting threshold value, the control unit 6 selects a transmitting/receiving operation based on the communication system under communication (step S219).

When the normalized evaluation parameter is equal to or larger than the cutting threshold value in the step S212, the control unit 6 judges whether or not the normalized evaluation parameter is smaller than the cutting threshold value as to the communication system under communication (step S213). When the normalized evaluation parameter is smaller than the cutting threshold value, the control unit 6 selects a switching operation to a sequence under detection (step S220).

When the normalized evaluation parameter is equal to or larger than the cutting threshold value in the step S213, the control unit 6 performs a comparing judgment as to priority orders of a communication system under communication and of a communication system under detection (step S214). In the case where the priority order of the communication system under communication is higher than that of the communication system under detection, the control unit 6 performs a comparing judgement between the normalized evaluation parameter and the priority threshold value as to the communication system under communication (step S115). In the case where the priority order of the communication system under detection is higher than that of the communication system under communication, the control unit 6 performs a comparing judgement between the normalized evaluation parameter and the priority threshold value as to the communication system under detection (step S216).

In the step S215, when the normalized evaluation parameter of the communication system under communication is equal to or larger than the priority threshold value, the control unit 6 selects a continuation of the transmitting/receiving operation based on the communication system under communication (step S219). When the normalized evaluation parameter of the communication system under communication is smaller than the priority threshold value, the control unit 6 performs a comparing operation of the normalized evaluation parameters (step S217).

In the step S216, when the normalized evaluation parameter of the communication system under detection is equal to or larger than the priority threshold value, the control unit 6 selects a switching operation to the communication system under detection (step S220). When the normalized evaluation parameter of the communication system under communication is smaller than the priority threshold value, the control unit 6 performs a comparing operation of the normalized evaluation parameters (step S217).

In the steps S217 and S218, the control unit 6 compares the normalized evaluation parameters with each other as to both the communication system under communication and the communication under detection so as to decide whether the communication system under communication is to be continued, or whether the switching operation to the communication system under detection is to be carried out. For example, the control unit 6 selects the switching operation to the communication system under detection when the comparing result becomes as follows: the normalized evaluation parameter of the communication system under detection > the normalized evaluation parameter of the communication system under communication,.

The normalized evaluation parameter is a normalized value which can be compared, without depending upon a communication system. Depending upon the nature of this normalized evaluation parameter, for example, a plurality of sets of a parameter equivalent to received electric power, and of a parameter equivalent to an error rate may be present as the normalized evaluation parameters. In this case where the plurality of sets of parameters are present, a judging condition is defined based on comparing formulae, logical formulae, and condition branches of these parameters.

In the step S218, if the switching operation to the sequence under detection is decided, the control unit 6 selects the switching operation to the sequence under detection as the switching decision (step S220). If not, the control unit 6 selects a continuation of the transmitting/receiving operation based on the communication system under communication (step S219).

Now, a description is made of normalization of an evaluation parameter. A method for normalizing an evaluation parameter is defined with respect to each of communication systems, and may be installed as "normalizing software". For instance, the evaluation parameter is normalized based on the below-mentioned method. In the case where reception power of a pilot signal transmitted from a base station is employed as an evaluation parameter, a normalized parameter is expressed by a ratio at which a value between an upper limit value and a lower limit value of the evaluation parameter is equally subdivided. In other words, the normalized evaluation parameter may be obtained by the below-mentioned formula.

That is, normalized evaluation parameter = (evaluation parameter - lower limit value)/(upper limit value - lower limit value).

At this time, it is conceivable that both the upper limit value and the lower limit value set a maximum value and a minimum value as to values available as the evaluation parameter. For example, it is conceivable that transmission power of a pilot signal transmitted from a base station is set as the upper limit value, whereas reception power of the pilot signal at a boundary of a cell effective range is set as the lower limit value.

As previously explained, in Embodiment 2, the evaluation parameter is converted into the normalized evaluation parameter which does not depend upon the communication system. As a result, the switching deciding software for deciding on the switching operation is no longer required to be formed with respect to each of the combinations constructed of the communication systems to be used in the switching decisions.

Embodiment 3

Referring to Fig. 8 and Fig. 9, a wireless mobile station apparatus according to Embodiment 3 of the present invention will be described. Fig. 8 is a diagram for showing a switching deciding conceptional idea of the wireless mobile station apparatus according to Embodiment 3 of the present invention. It should be noted that a structure of hardware (H/W) of the wireless mobile station apparatus according to Embodiment 3 is similar to that of Embodiment 1.

In Embodiment 2, the evaluation parameter is normalized for every communication system. In Embodiment 3, normalization of an evaluation parameter is carried out by commonly-used general-purpose normalizing software with respect to different communication systems. Also, a switching decision is made as to a combination constructed of different communication systems by the commonly-used general-purpose switching deciding software based on the normalized evaluation parameter.

In Embodiment 3, evaluation parameters which are different from each other for every communication system are normalized by the commonly-used "general-purpose normalizing software". The general-purpose normalizing software executed by the control unit 6 does not depend upon the communication systems, and is commonly used for these communication systems. The general-purpose normalizing software may be stored in the storage unit 7, or may be alternatively installed in the control unit 6. Also, the general-purpose switching deciding software executed by the control unit 6 does not depend upon the combination made of the communication systems, and is commonly used for these combined communication systems. The general-purpose switching deciding software may be stored in the storage unit 7, or may be alternatively installed in the control unit 6.

A normalizing sequence is expressed by, for example, as explained above, the ratio at which the values between the upper limit value and the lower limit value are equally subdivided. In order to perform the normalization by this method, both the upper limit value and the lower limit value other than the evaluation parameter are required to be transferred from either the transmitting/receiving unit 3 or the transmitting/receiving unit 5 to the control unit 6 in combination with the evaluation parameter.

Although these upper limit value and lower limit value may be separately set as explained above, it is conceivable that a priority threshold value is set as the upper limit value and the cutting threshold value is set as the lower limit value. In this case, an evaluation parameter after being normalized may be obtained by the below-mentioned formula. It should also be noted that a priority threshold value after being normalized becomes "1", and a cutting threshold value after being normalized becomes "0".

That is, normalized evaluation parameter = (evaluation parameter - cutting threshold value)/(priority threshold value - cutting threshold value).

When normalized evaluation parameters are compared with each other and switching of a communication system is decided by merely comparing the normalized evaluation parameters with each other which have been calculated in the above-explained manner, then there is a possibility that switching of the communication systems may frequently occur in the case where a variation of evaluation parameters occurs under such a condition that normalized values of the evaluation parameters of two communication systems are merely equal to each other. In order to suppress this occurrence, it is conceivable that a switching postponed value is introduced. When this switching postponed value is introduced, a switching operation to a communication system under detection is selected in the case where the following relationship is established as follows: normalized evaluation parameter of communication system under detection > normalized evaluation parameter of communication system under communication + switching postponed value.

Next, switching deciding operation executed in Embodiment 3 will now be described. A switching operation of communication sequences for performing transmitting/receiving operations and detection sequences while using both the transmitting/receiving unit 3 and the transmitting/receiving unit 5 are similar to those of Embodiment 1. In this example, a description is made of both a normalizing operation and a switching deciding operation in Embodiment 3.

Fig. 9 is a flow chart for describing the normalizing operation and the switching deciding operation executed by the control unit of the wireless mobile station apparatus according to Embodiment 3 of the present invention. The normalizing operation and the switching deciding operation will now be explained with reference to this flow chart of Fig. 9. It should be noted that steps S311 to S312 correspond to general-purpose normalizing software, and steps S313 to S321 correspond to general-purpose switching deciding software.

Firstly, the control unit 6 requests both the transmitting/receiving unit 3 and the transmitting/receiving unit 5 to acquire evaluation parameters used in switching deciding operations (step S311).

Next, the control unit 6 normalizes the acquired evaluation parameters (step S312). A normalizing sequence is performed based on any one of the above-described plurality of methods.

Next, the control unit 6 judges whether or not the normalized evaluation parameter is smaller than the normalized cutting threshold value as to the communication system under detection (step S313). When the normalized evaluation parameter is smaller than the normalized cutting threshold value, the control unit 6 selects a transmitting/receiving operation based on the communication system under communication (step S320).

When the normalized evaluation parameter is equal to or larger than the normalized cutting threshold value in the step S313, the control unit 6 judges whether or not the normalized evaluation parameter is smaller than the normalized cutting threshold value as to the communication system under communication (step S314). When the normalized evaluation parameter is smaller than the normalized cutting threshold value, the control unit 6 selects a sequence under detection (step S321).

When the normalized evaluation parameter is equal to or larger than the normalized cutting threshold value in the step S314, the control unit 6 performs a judgment as to priority orders of a communication system under communication and of a communication system under detection (step S315). In the case where the priority order of the communication system under communication is higher than that of the communication system under detection, the control unit 6 performs a comparing judgement between the normalized evaluation parameter and the normalized priority threshold value as to the communication system under communication (step S316). In the case where the priority order of the communication system under detection is higher than that of the communication system under communication, the control unit 6 performs a comparing judgement between the normalized evaluation parameter and the normalized priority threshold value as to the communication system under detection (step S317).

In the step S316, when the normalized evaluation parameter of the communication system under communication is equal to or larger than the normalized priority threshold value, the control unit 6 selects a continuation of the transmitting/receiving operation based on the communication system under communication (step S320). When the normalized evaluation parameter of the communication system under communication is smaller than the normalized priority threshold value, the control unit 6 performs a comparing operation of the normalized evaluation parameters (step S117).

In the step S317, when the normalized evaluation parameter of the communication system under detection is equal to or larger than the normalized priority threshold value, the control unit 6 selects a switching operation to the communication system under detection (step S321). When the normalized evaluation parameter of the communication system under detection is smaller than the normalized priority threshold value, the control unit 6 performs a comparing operation of the normalized evaluation parameters (step S117).

Next, the control unit 6 compares the normalized evaluation parameters with each other (step S318). In the step S318 and a step S319, the control unit 6 compares the normalized evaluation parameters of both the communication system under communication and the communication system user detection with each other, and thus, decides whether the communication system under communication is to be continued, or whether the switching operation to the communication system under detection is to be carried out. Also, in the comparing operation executed in this example, the above-explained switching postponed value is also considered.

In the step S319, if the switching operation to the sequence under detection is decided, the control unit 6 selects the switching operation to the sequence under detection as the switching decision (step S321). If not, the control unit 6 selects a continuation of the transmitting/receiving operation based on the communication system under communication (step S320).

As previously explained, in Embodiment 3, the evaluation parameters are normalized by the same general-purpose normalizing software with respect to the different communication systems. As a result, it is no longer required to form the normalizing software with respect to each of the communication systems. Also, the evaluation parameter used for the switching operation is converted into the normalized evaluation parameter which does not depend upon the communication system so as to perform the switching deciding operation. As a result, it is no longer required to form the switching deciding software for the switching decision for every combined system of the communication systems to be judged.

## Claims

**1.** A wireless mobile station apparatus, which is equipped with at least a first transmitting/receiving unit (3) and a second transmitting/receiving unit (5), the first transmitting/receiving unit (3) and the second transmitting/receiving unit (5) each having functions which can be changed by rewriting software,
the wireless mobile station apparatus comprising a control unit (6) for performing alternate switching between a transmitting/receiving function and a communication counterpart station detecting function of a plurality of communication systems by a switching deciding function, to assign the transmitting/receiving function to one of the first and second transmitting/receiving units (3,5) constantly.

**2.** A wireless mobile station apparatus according to claim 1, further comprising a storage unit (7) for storing thereinto at least:

a first set of transmitting/receiving software used in transmitting/receiving operations by a first communication system;
a second set of transmitting/receiving software used in transmitting/receiving operations based on a second communication system;
communication counterpart station detecting software for detecting a communication counterpart station in the second communication system; and
switching deciding software for deciding on switching between the communication systems in a combination of the first and second communication systems, wherein:

the control unit (6) reads out the first set of transmitting/receiving software to write the read first set of transmitting/receiving software into the first transmitting/receiving unit (3), initiates the first transmitting/receiving unit (3) so as to start transmitting/receiving operations based on the first communication system, and reads out the communication counterpart station detecting software from the storage unit (7) to write the read communication counterpart station detecting software into the second transmitting/receiving unit (5), and initiates the second transmitting/receiving unit (5) so as to start a detecting operation of a communication counterpart station based on the second communication system;

the control unit (6) reads the switching deciding software internally from the storage unit (7), and initiates the switching deciding software so as to decide on switching between the communication systems based on switching evaluation data;
in the case where an operation to switch to the second communication system is selected, the control unit (6) reads the second set of transmitting/receiving software from the storage unit (7) to write the read second set of transmitting/receiving software into the second transmitting/receiving unit (5), and initiates the second transmitting/receiving unit (5) so as to start transmitting/receiving operations based on the second communication system.

**3.** A wireless mobile station apparatus according to claim 2, wherein:

the switching evaluation data is constituted of evaluation parameters for predicting communication qualities of the first and second communication systems, a cutting threshold value and a priority threshold value for a switching deciding operation, and an application priority order between the first and second communication systems;
the control unit (6) operated based on the switching deciding software acquires evaluation parameters from the first and second transmitting/receiving units (3,5), and in the case where the evaluation parameter of the second communication system under detection is smaller than the cutting threshold value, the control unit (6) selects continuation of the transmitting/receiving operation based on the first communication system under communication; and
in the case where the evaluation parameter of the second communication system under detection is equal to or larger than the cutting threshold value and the evaluation parameter of the first communication system under communication is smaller than the cutting threshold value, the control unit (6) selects an operation to switch to the second communication system under detection.

**4.** A wireless mobile station apparatus according to claim 3, wherein:

the control unit (6) operated based on the switching deciding software judges a priority order between the first communication system under communication and the second communication system under detection by comparing the priority orders with each other, in the case where the evaluation parameter of the second communication system under detection is equal to or larger than the cutting threshold value, and the evaluation parameter of the first communication system under communication is equal to or larger than the cutting threshold value;
in the case where the priority order of the first communication system under communication is higher, when the evaluation parameter of the first communication system under communication is equal to or larger than the priority threshold value, the control unit (6) selects the continuation of the transmitting/receiving operation by the first communication under communication; and
in the case where the priority order of the second communication system under detection is higher, when the evaluation parameter of the second communication system under detection is equal to or larger than the priority threshold value, the control unit (6) selects the operation to switch to the second communication system under detection.

**5.** A wireless mobile station apparatus according to claim 4, wherein in the case where the evaluation parameter of the first communication system under communication is smaller than the priority threshold value, or in the case where the evaluation parameter of the second communication system under detection is smaller than the priority threshold value, the control unit (6) operated based on the switching deciding software compares the evaluation parameter of the first communication system under communication with the evaluation parameter of the second communication system under detection so as to select the operation to switch to the second communication system under detection, or to select the continuation of the transmitting/receiving operation based on the first communication system under communication.

**6.** A wireless mobile station apparatus according to claim 1, further comprising a storage unit (7) for storing there into at least:

a first set of transmitting/receiving software used in transmitting/receiving operations based on a first communication system;
a second set of transmitting/receiving software used in transmitting/receiving operations based on a second communication system;
communication counterpart station detecting software for detecting a communication counterpart station in the second communication system;
a first set of normalizing software for normalizing an evaluation parameter acquired based on the first communication system, and a second set of normalizing software for normalizing an evaluation parameter acquired based on the second communication system, wherein:

the control unit (6) reads out both the first set of transmitting/receiving software and the first set of normalizing software to write the read first set of transmitting/receiving software and first set of normalizing software into the first transmitting/receiving unit (3), initiates the first transmitting/receiving unit (3) so as to start transmitting/receiving operations based on the first communication system, and to normalize the acquired evaluation parameter;
the control unit (6) reads out the second set of normalizing software and the communication counterpart station detecting software from the storage unit (7) to write the read second set of normalizing software and communication counterpart station detecting software into the second transmitting/receiving unit (5), and initiates the second transmitting/receiving unit (5) so as to start a detecting operation of a communication counterpart station based on the second communication system, and to normalize the acquired evaluation parameter;
the control unit (6) initiates general-purpose switching deciding software for deciding on switching between the communication systems in a combination constituted of different communication systems so as to decide on switching between the communication systems based on switching evaluation data; and
in the case where an operation to switch to the second communication system is selected, the control unit (6) reads out both the second set of transmitting/receiving software and the first set of normalizing software from the storage unit (7) to write the read second set of transmitting/receiving software and first set of normalizing software into the second transmitting/receiving unit (5), and initiates the second transmitting/receiving unit (5) so as to start transmitting/receiving operations based on the second communication system.

**7.** A wireless mobile station apparatus according to claim 6, wherein:

the switching evaluation data is constituted of normalized evaluation parameters for predicting communication qualities of the first and second communication systems, a cutting threshold value and a priority threshold value for a switching deciding operation, and an application priority order between the first and second communication systems;
the normalized evaluation parameter is obtained from the following equation, assuming that a maximum value and a minimum value among values available as the evaluation parameters are set as an upper limit value and a lower limit value:

normalized evaluation parameter = (evaluation parameter - lower limit value)/(upper limit value - lower limit value);

the control unit (6) operated based on the general-purpose switching deciding software acquires normalized evaluation parameters from the first and second transmitting/receiving units (3,5), and when the normalized evaluation parameter of the second communication system under detection is smaller than the cutting threshold value, the control unit (6) selects the continuation of the transmitting/receiving operation based on the first communication system under communication; and
in the case where the normalized evaluation parameter of the second communication system under detection is equal to or larger than the cutting threshold value and the normalized evaluation parameter of the first communication system under communication is smaller than the cutting threshold value, the control unit (6) selects the operation to switch to the second communication system under detection.

**8.** A wireless mobile station apparatus according to claim 7, wherein:

the control unit (6) operated based on the general-purpose switching deciding software judges a priority order between the first communication system under communication and the second communication system under detection by comparing the priority orders with each other in the case where the normalized evaluation parameter of the second communication system under detection is equal to or larger than the cutting thresholdvalue, and the normalized evaluation parameter of the first communication system under communication is equal to or larger than the cutting threshold value;
in the case where the priority order of the first communication system under communication is higher, when the normalized evaluation parameter of the first communication system under communication is equal to or larger than the priority threshold value, the control unit (6) selects the continuation of the transmitting/receiving operation by the first communication under communication; and
in the case where the priority order of the second communication system under detection is higher, when the normalized evaluation parameter of the second communication system under detection is equal to or larger than the priority threshold value, the control unit selects the operation to switch to the second communication system under detection.

**9.** A wireless mobile station apparatus according to claim 8, wherein in the case where the normalized evaluation parameter of the first communication system under communication is smaller than the priority threshold value, or in the case where the normalized evaluation parameter of the second communication system under detection is smaller than the priority threshold value, the control unit (6) operated based on the general-purpose switching deciding software compares the normalized evaluation parameter of the first communication system under communication with the normalized evaluation parameter of the second communication system under detection so as to select the switching operation to the second communication system under detection, or to select the continuation of the transmitting/receiving operation based on the first communication system under communication.

**10.** A wireless mobile station apparatus according to claim 1, further comprising a storage unit (7) for storing thereinto at least:

a first set of transmitting/receiving software used in transmitting/receiving operations based on a first communication system;
a second set of transmitting/receiving software used in transmitting/receiving operations based on a second communication system; and
communication counterpart station detecting software for detecting a communication counterpart station in the second communication system, wherein:

the control unit (6) reads out the first set of transmitting/receiving software to write the read first set of transmitting/receiving software into the first transmitting/receiving unit (3), initiates the first transmitting/receiving unit (3) so as to start transmitting/receiving operations based on the first communication system, and reads out the communication counterpart station detecting software from the storage unit (7) to write the read communication counterpart station detecting software into the second transmitting/receiving unit (5), and initiates the second transmitting/receiving unit (5) so as to start a detecting operation of a communication counterpart station based on the second communication system;
the control unit (6) initiates general-purpose normalizing software for normalizing evaluation parameters of different communication systems, and general-purpose switching deciding software for deciding on switching between the communication systems in a combination constituted of the different communication systems so as to decide on switching between the communication system based on switching evaluation data; and
in the case where an operation to switch to the second communication system is selected, the control unit (6) reads the second set of transmitting/receiving software from the storage unit (7) to write the read second set of transmitting/receiving software into the second transmitting/receiving unit (5), and initiates the second transmitting/receiving unit (5) so as to start transmitting/receiving operations based on the second communication system.

**11.** A wireless mobile station apparatus according to claim 10, wherein:

the switching evaluation data is constituted of the normalized evaluation parameters for predicting communication qualities of the first and second communication systems, a cutting threshold value and a priority threshold value for a switching deciding operation, and an application priority order between the first and second communication systems;
the normalized evaluation parameter is obtained from the following equation:

normalized evaluation parameter = (evaluation parameter - cutting threshold value)/(priority threshold value - cutting threshold value);

the control unit (6) operated based on the general-purpose normalizing software and the general-purpose switching deciding software acquires evaluation parameters from the first and second transmitting/receiving units (3, 5) so as to normalize the acquired evaluation parameters based on the equation;
in the case where the normalized evaluation parameter of the second communication system under detection is smaller than a normalized cutting threshold value, the control unit (6) selects the continuation of the transmitting/receiving operation based on the first communication system under communication; and
in the case where the normalized evaluation parameter of the second communication system under detection is equal to or larger than the normalized cutting threshold value, and the normalized evaluation parameter of the first communication system under communication is smaller than the normalized cutting threshold value, the control unit (6) selects the operation to switch to the second communication under detection.

**12.** A wireless mobile station apparatus according to claim 11, wherein
the control unit (6) operated based on the general-purpose switching deciding software judges a priority order between the first communication system under communication and the second communication system under detection by comparing the priority orders with each other in the case where the normalized evaluation parameter of the second communication system under detection is equal to or larger than the normalized cutting threshold value, and the normalized evaluation parameter of the first communication system under communication is equal to or larger than the normalized cutting threshold value;
in the case where the priority order of the first-communication systemunder communication is higher, when the normalized evaluation parameter of the first communication system under communication is equal to or larger than the normalized priority threshold value, the control unit (6) selects the continuation of the transmitting/receiving operation by the first communication under communication; and
in the case where the priority order of the second communication system under detection is higher, when the normalized evaluation parameter of the second communication system under detection is equal to or larger than the normalized priority threshold value, the control unit (6) selects the operation to switch to the second communication system under detection.

**13.** A wireless mobile station apparatus according to claim 12, wherein: in the case where the normalized evaluation parameter of the first communication system under communication is smaller than the normalized priority threshold value, or in the case where the normalized evaluation parameter of the second communication system under detection is smaller than the normalized priority threshold value, the control unit (6) operated based on the general-purpose switching deciding software compares the normalized evaluation parameter of the first communication system under communication with the normalized evaluation parameter of the second communication system under detection so as to select the operation to switch to the second communication system under detection, or to select the continuation of the transmitting/receiving operation based on the first communication system under communication.

**14.** A communication switching deciding method for a wireless mobile station apparatus equipped with at least a first transmitting/receiving unit (3) and a second transmitting/receiving unit (5), the first transmitting/receiving unit (3) and the second transmitting/receiving unit (5) each having functions which can be changed by rewriting software,
the communication switching deciding method comprising the step of performing alternate switching between a transmitting/receiving function and a communication counterpart station detecting function of a plurality of communication systems based on switching evaluation data by a switching deciding function to assign the transmitting/receiving function to one of the first and second transmitting/receiving units (3,5) constantly,
wherein the switching evaluation data is constituted of an evaluation parameter for predicting a communication quality of a communication system, and both a cutting threshold value and a priority threshold value which are used for deciding on switching between the communication systems.

**15.** A communication switching deciding method according to claim 14, wherein the switching deciding function includes the steps of:

acquiring evaluation parameters related to the first and second communication systems;
deciding on switching between the first and second communication systems by comparing the evaluation parameters with the cutting threshold value;
deciding on switching between the first and second communication systems by comparing the evaluation parameters with the priority threshold value; and
deciding on switching between the first and second communication systems by comparing the evaluation parameters with each other.

**16.** A communication switching deciding method according to claim 14, wherein:

the assigning step includes the step of normalizing the evaluation parameters; and
the switching deciding function includes the step of:

acquiring normalized evaluation parameters related to the first and second communication systems;
deciding on switching between the first and second communication systems by comparing the normalized evaluation parameters with the cutting threshold value;
deciding on switching between the first and second communication systems by comparing the normalized evaluation parameters with the priority threshold value; and
deciding on switching between the first and second communication systems by comparing the normalized evaluation parameters with each other.

**17.** A communication switching deciding method according to claim 14, wherein the switching deciding function includes the steps of:

acquiring evaluationparameters related to the first and second communication systems;
normalizing the evaluation parameters;
deciding on switching between the first and second communication systems by comparing the normalized evaluation parameters with the normalized cutting threshold value;
deciding on switching between the first and second communication systems by comparing the normalized evaluation parameters with the normalized priority threshold value; and
deciding on switching between the first and second communication systems by comparing the normalized evaluation parameters with each other.

## Patentansprüche

**1.** Drahtlose Mobilstationsvorrichtung, die mit zumindest einer ersten Sende-/Empfangseinheit (3) und einer zweiten Sende-/Empfangseinheit (5) ausgestattet ist, wobei die erste Sende-/Empfangseinheit (3) und die zweite Sende-/Empfangseinheit (5) jeweils Funktionen haben, die durch Neuschreiben von Software geändert werden können,
welche drahtlose Mobilstationsvorrichtung eine Steuereinheit (6) zum Durchführen eines abwechselnden Schaltens zwischen einer Sende-/Empfangsfunktion und einer Kommunikationsgegenstations-Erfassungsfunktion von mehreren Kommunikationssystemen durch eine Schaltentscheidungsfunktion aufweist, um die Sende-/Empfangsfunktion konstant einer von der ersten und der zweiten Sende-/Empfangseinheit (3, 5) zuzuweisen.

**2.** Drahtlose Mobilstationsvorrichtung nach Anspruch 1, weiterhin aufweisend eine Speichereinheit (7), um darin zumindest zu speichern:

einen ersten Satz von Sende/-Empfangs-Software, die bei Sende-/Empfangsoperationen durch ein erstes Kommunikationssystem verwendet wird;
einen zweiten Satz von Sende-/Empfangs-Software, die bei Sende-/Empfangsoperationen auf der Grundlage eines zweiten Kommunikationssystems verwendet wird;
eine Kommunikationsgegenstations-Erfassungssoftware zum Erfassen einer Kommunikationsgegenstation in dem zweiten Kommunikationssystem; und
eine Schaltentscheidungs-Software zum Entscheiden über das Schalten zwischen den Kommunikationssystemen in einer Kombination aus dem ersten und dem zweiten Kommunikationssystem, wobei:

die Steuereinheit (6) den ersten Satz von Sende-/Empfangs-Software ausliest, um den gelesenen ersten Satz von Sende-/Empfangs-Software in die erste Sende-/Empfangseinheit (3) zu schreiben,

die erste Sende-/Empfangseinheit (3) so initiiert, dass die Sende-/Empfangsoperationen auf der Grundlage des ersten Kommunikationssystems gestartet werden, und die Kommunikationsgegenstations-Erfassungssoftware aus der Speichereinheit (7) ausliest, um die gelesene Kommunikationsgegenstations-Erfassungssoftware in die zweite Sende-/Empfangseinheit (5) zu schreiben, und
die zweite Sende-/Empfangseinheit (5) so initiiert, dass eine Erfassungsoperation für eine Kommunikationsgegenstation auf der Grundlage des zweiten Kommunikationssystems gestartet wird;
die Steuereinheit (6) die Schaltentscheidungs-Software intern aus der Speichereinheit (7) liest und die Schaltentscheidungs-Software so initiiert, dass über das Schalten zwischen den Kommunikationssystemen auf der Grundlage von Schaltauswertungsdaten entschieden wird;
die Steuereinheit (6) in dem Fall, in welchem eine Operation zum Schalten zu dem zweiten Kommunikationssystem ausgewählt ist, den zweiten Satz von Sende-/Empfangs-Software aus der Speichereinheit (7) liest, um den gelesenen zweiten Satz von Sende-/Empfangs-Software in die zweite Sende-/Empfangseinheit (5) zu schreiben, und die zweite Sende-/Empfangseinheit (5) so initiiert, dass Sende-/Empfangsoperationen auf der Grundlage des zweiten Kommunikationssystems gestartet werden.

**3.** Drahtlose Mobilstationsvorrichtung nach Anspruch 2, bei der:

die Schaltauswertungsdaten gebildet sind aus Auswertungsparametern zum Vorhersagen von Kommunikationsqualitäten des ersten und des zweiten Kommunikationssystems, einem Grenzschwellenwert und einem Prioritätsschwellenwert für eine Schaltentscheidungsoperation, und einer Anwendungsprioritätsreihenfolge zwischen dem ersten und dem zweiten Kommunikationssystem;
die auf der Grundlage der Schaltentscheidungs-Software operierende Steuereinheit (6) Auswertungsparameter von der ersten und der zweiten Sende-/Empfangseinheit (3, 5) erfasst, und in dem Fall, in welchem der Auswertungsparameter des zweiten Kommunikationssystems unter Erfassung kleiner als der Grenzschwellenwert ist, die Steuereinheit (6) eine Fortsetzung der Sende-/Empfangsoperation auf der Grundlage des ersten Kommunikationssystems unter Kommunikation auswählt; und
in dem Fall, in welchem der Auswertungsparameter des zweiten Kommunikationssystems unter Erfassung gleich dem oder größer als der Grenzschwellenwert ist und der Auswertungsparameter des ersten Kommunikationssystems unter Kommunikation kleiner als der Grenzschwellenwert ist, die Steuereinheit (6) eine Operation zum Schalten zu dem zweiten Kommunikationssystem unter Erfassung auswählt.

**4.** Drahtlose Mobilstationsvorrichtung nach Anspruch 3, bei der:

die auf der Grundlage der Schaltentscheidungs-Software operierende Steuereinheit (6) eine Prioritätsreihenfolge zwischen dem ersten Kommunikationssystem unter Kommunikation und dem zweiten Kommunikationssystem unter Erfassung beurteilt durch Vergleichen der Prioritätsreihenfolgen miteinander, in dem Fall, dass der Auswertungsparameter des zweiten Kommunikationssystems unter Erfassung gleich dem oder größer als der Grenzschwellenwert ist, und der Auswertungsparameter des ersten Kommunikationssystems unter Kommunikation gleich dem oder größer als der Grenzschwellenwert ist;
für den Fall, dass die Prioritätsreihenfolge des ersten Kommunikationssystems unter Kommunikation höher ist, wenn der Auswertungsparameter des ersten Kommunikationssystems unter Kommunikation gleich dem oder größer als der Prioritätsschwellenwert ist, die Steuereinheit (6) die Fortsetzung der Sende-/Empfangsoperation durch das erste Kommunikationssystem unter Kommunikation auswählt; und
für den Fall, dass die Prioritätsreihenfolge des zweiten Kommunikationssystems unter Erfassung höher ist, wenn der Auswertungsparameter des zweiten Kommunikationssystems unter Erfassung gleich dem oder größer als der Prioritätsschwellenwert ist, die Steuereinheit (6) die Operation zum Schalten zu dem zweiten Kommunikationssystem unter Erfassung auswählt.

**5.** Drahtlose Mobilstationsvorrichtung nach Anspruch 4, bei der für den Fall, dass der Auswertungsparameter des ersten Kommunikationssystems unter Kommunikation kleiner als der Prioritätsschwellenwert ist, oder für den Fall, dass der Auswertungsparameter des zweiten Kommunikationssystems unter Erfassung kleiner als der Prioritätsschwellenwert ist, die auf der Grundlage der Schaltentscheidungs-Software operierende Steuereinheit (6) den Auswertungsparameter des ersten Kommunikationssystems unter Kommunikation mit dem Auswertungsparameter des zweiten Kommunikationssystems unter Erfassung so vergleicht, dass die Operation zum Schalten zu dem zweiten Kommunikationssystem unter Erfassung ausgewählt wird oder die Fortsetzung der Sende-/Empfangsoperation auf der Grundlage des ersten Kommunikationssystems unter Kommunikation ausgewählt wird.

**6.** Drahtlose Mobilstationsvorrichtung nach Anspruch 1, weiterhin aufweisend eine Speichereinheit (7), um in dieser zumindest zu speichern:

einen ersten Satz von Sende-/Empfangs-Software, die bei Sende-/Empfangsoperationen auf der Grundlage eines ersten Kommunikationssystems verwendet wird;
einen zweiten Satz von Sende-/Empfangs-Software, die bei Sende-/Empfangsoperationen auf der Grundlage eines zweiten Kommunikationssystems verwendet wird;
eine Kommunikationsgegenstations-Erfassungssoftware zum Erfassen einer Kommunikationsgegenstation in dem zweiten Kommunikationssystem;
einen ersten Satz von Normierungssoftware zum Normieren eines Auswertungsparameters, der auf der Grundlage des ersten Kommunikationssystems erfasst wurde, und einen zweiten Satz von Normierungssoftware zum Normieren eines Auswertungsparameters, der auf der Grundlage des zweiten Kommunikationssystems erfasst wurde, wobei:

die Steuereinheit (6) sowohl den ersten Satz von Sende-/Empfangs-Software als auch den ersten Satz von Normierungssoftware ausliest, um den jeweils gelesenen ersten Satz von Sende-/Empfangs-Software und ersten Satz von Normierungssoftware in die erste Sende-/Empfangseinheit (3) zu schreiben, die erste Sende-/Empfangseinheit (3) so initiiert, dass Sende-/Empfangsoperationen auf der Grundlage des ersten Kommunikationssystems gestartet werden, und den erfassten Auswertungsparameter zu normieren;
die Steuereinheit (6) den zweiten Satz von Normierungssoftware und die Kommunikationsgegenstations-Erfassungssoftware aus der Speichereinheit (7) ausliest, um den jeweils gelesenen zweiten Satz von Normierungssoftware und Kommunikationsgegenstations-Erfassungssoftware in die zweite Sende-/Empfangseinheit (5) zu schreiben, und die zweite Sende-/Empfangseinheit (5) so initiiert,
dass eine Erfassungsoperation einer Kommunikationsgegenstation auf der Grundlage des zweiten Kommunikationssystems gestartet wird, und den erfassten Auswertungsparameter zu normieren;
die Steuereinheit (6) eine Universalschaltentscheidungs-Software zum Entscheiden über das Schalten zwischen den Kommunikationssystemen in einer aus verschiedenen Kommunikationssystemen bestehenden Kombination so initiiert, dass über das Schalten zwischen den Kommunikationssystemen auf der Grundlage von Schaltauswertungsdaten bestimmt wird; und
für den Fall, dass eine Operation zum Schalten zu dem zweiten Kommunikationssystem ausgewählt wird, die Steuereinheit (6) sowohl den zweiten Satz von Sende-/Empfangs-Software als auch den ersten Satz von Normierungssoftware aus der Speichereinheit (7) ausliest, um den jeweils gelesenen zweiten Satz von Sende-/Empfangs-Software und ersten Satz von Normierungssoftware in die zweite Sende-/Empfangseinheit (5) zu schreiben, und die zweite Sende-/Empfangseinheit (5) so initiiert, dass Sende-/Empfangsoperationen auf der Grundlage des zweiten Kommunikationssystems gestartet werden.

**7.** Drahtlose Mobilstationsvorrichtung nach Anspruch 6, bei der:

die Schaltauswertungsdaten aus normierten Auswertungsparametern zum Vorhersagen von Kommunikationsqualitäten des ersten und des zweiten Kommunikationssystems, einem Grenzschwellenwert und einem Prioritätsschwellenwert für eine Schaltentscheidungsoperation, und einer Anwendungsprioritätsreihenfolge zwischen dem ersten und dem zweiten Kommunikationssystem gebildet sind;
der normierte Auswertungsparameter aus der folgenden Gleichung erhalten wird unter der Annahme, dass ein maximaler Wert und ein minimaler Wert unter Werten, die als die Auswertungsparameter verfügbar sind, als ein oberer Grenzwert und ein unterer Grenzwert gesetzt werden:

normierter Auswertungsparameter = (Auswertungsparameter - unterer Grenzwert)/(oberer Grenzwert - unterer Grenzwert);

die auf der Grundlage der Universalschaltentscheidungs-Software operierende Steuereinheit (6) normierte Auswertungsparameter von der ersten und der zweiten Sende-/Empfangseinheit (3, 5) erfasst, und wenn der normierte Auswertungsparameter des zweiten Kommunikationssystems unter Erfassung kleiner als der Grenzschwellenwert ist, die Steuereinheit (6) die Fortsetzung der Sende-/Empfangsoperation auf der Grundlage des ersten Kommunikationssystems unter Kommunikation auswählt; und
für den Fall, dass der normierte Auswertungsparameter des zweiten Kommunikationssystems unter Erfassung gleich dem oder größer als der Grenzschwellenwert ist und der normierte Auswertungsparameter des ersten Kommunikationssystems unter Kommunikation kleiner als der Grenzschwellenwert ist, die Steuereinheit (6) die Operation zum Schalten zu dem zweiten Kommunikationssystem unter Erfassung auswählt.

**8.** Drahtlose Mobilstationsvorrichtung nach Anspruch 7, bei der:

die auf der Grundlage der Universalschaltentscheidungs-Software operierende Steuereinheit (6) eine Prioritätsreihenfolge zwischen dem ersten Kommunikationssystem unter Kommunikation und
dem zweiten Kommunikationssystem unter Erfassung beurteilt durch Vergleichen der Prioritätsreihenfolgen miteinander für den Fall, dass der normierte Auswertungsparameter des zweiten Kommunikationssystems unter Erfassung gleich dem oder größer als der Grenzschwellenwert ist, und
der normierte Auswertungsparameter des ersten Kommunikationssystems unter Kommunikation gleich dem oder größer als der Grenzschwellwert ist;
für den Fall, dass die Prioritätsreihenfolge des ersten Kommunikationssystems unter Kommunikation höher ist, wenn der normierte Auswertungsparameter des ersten Kommunikationssystems unter Kommunikation gleich dem oder größer als der Prioritätsschwellenwert ist, die Steuereinheit (6) die Fortsetzung der Sende-/Empfangsoperation durch das erste Kommunikationssystem unter Kommunikation auswählt; und
für den Fall, dass die Prioritätsreihenfolge des zweiten Kommunikationssystems unter Erfassung höher ist, wenn der normierte Auswertungsparameter des zweiten Kommunikationssystems unter Erfassung gleich dem oder größer als der Prioritätsschwellenwert ist, die Steuereinheit die Operation zum Schalten zu dem zweiten Kommunikationssystem unter Erfassung auswählt.

**9.** Drahtlose Mobilstationsvorrichtung nach Anspruch 8, bei der für den Fall, dass der normierte Auswertungsparameter des ersten Kommunikationssystems unter Kommunikation kleiner als der Prioritätsschwellenwert ist, oder für den Fall, dass der normierte Auswertungsparameter des zweiten Kommunikationssystems unter Erfassung kleiner als der Prioritätsschwellenwert ist, die auf der Grundlage der Universalschaltentscheidungs-Software operierende Steuereinheit (6) den normierten Auswertungsparameter des ersten Kommunikationssystems unter Kommunikation mit dem normierten Auswertungsparameter des zweiten Kommunikationssystems unter Erfassung so vergleicht, dass die Schaltoperation zu dem zweiten Kommunikationssystem unter Erfassung ausgewählt wird, oder die Fortsetzung der Sende-/Empfangsoperation auf der Grundlage des ersten Kommunikationssystems unter Kommunikation ausgewählt wird.

**10.** Drahtlose Mobilstationsvorrichtung nach Anspruch 1, weiterhin aufweisend eine Speichereinheit (7), um in dieser zumindest zu speichern:

einen ersten Satz von Sende-/Empfangs-Software, die bei Sende-/Empfangsoperationen auf der Grundlage eines ersten Kommunikationssystems verwendet wird;
einen zweiten Satz von Sende-/Empfangs-Software, die bei Sende-/Empfangsoperationen auf der Grundlage eines zweiten Kommunikationssystems verwendet wird; und
eine Kommunikationsgegenstations-Erfassungssoftware zum Erfassen einer Kommunikationsgegenstation in dem zweiten Kommunikationssystem, wobei:

die Steuereinheit (6) den ersten Satz von Sende-/Empfangs-Software ausliest, um den gelesenen ersten Satz von Sende-/Empfangs-Software in die erste Sende-/Empfangseinheit (3) zu schreiben,
die erste Sende-/Empfangseinheit (3) so initiiert, dass Sende-/Empfangsoperationen auf der Grundlage des ersten Kommunikationssystems gestartet werden, und die Kommunikationsgegenstations-Erfassungssoftware aus der Speichereinheit (7) ausliest, um die gelesene Kommunikationsgegenstations-Erfassungssoftware in die zweite Sende-/Empfangseinheit (5) zu schreiben, und die zweite Sende-/Empfangseinheit (5) so initiiert,
dass eine Erfassungsoperation einer Kommunikationsgegenstation auf der Grundlage des zweiten Kommunikationssystems gestartet wird;
die Steuereinheit (6) eine Universalnormierungs-Software zum Normieren von Auswertungsparametern verschiedener Kommunikationssysteme und eine Universalschaltentscheidungs-Software zum Entscheiden über das Schalten zwischen den Kommunikationssystemen in einer Kombination, die aus den verschiedenen Kommunikationssystemen gebildet ist, initiiert, um über das Schalten zwischen den Kommunikationssystemen auf der Grundlage von Schaltauswertungsdäten zu entscheiden; und
für den Fall, dass eine Operation zum Schalten zu dem zweiten Kommunikationssystem ausgewählt wird, die Steuereinheit (6) den zweiten Satz von Sende-/Empfangs-Software aus der Speichereinheit (7) liest, um den gelesenen zweiten Satz von Sende-/Empfangs-Software in die zweite Sende-/Empfangseinheit (5) zu lesen, und die zweite Sende-/Empfangseinheit (5) so initiiert, dass Sende-/Empfangsoperationen auf der Grundlage des zweiten Kommunikationssystems gestartet werden.

**11.** Drahtlose Mobilstationsvorrichtung nach Anspruch 10, bei der:

die Schaltauswertungsdaten gebildet sind aus den normierten Auswertungsparametern zum Vorhersagen von Kommunikationsqualitäten des ersten und des zweiten Kommunikationssystems, einem Grenzschwellenwert und einem Prioritätsschwellenwert für eine Schaltentscheidungsoperation, und einer Anwendungsprioritätsreihenfolge zwischen dem ersten und dem zweiten Kommunikationssystem;
der normierte Auswertungsparameter aus der folgenden Gleichung erhalten wird:

$$\text{normierter Auswertungsparameter} = (\text{Auswertungsparameter} - \text{Grenzschwellenwert})/(\text{Prioritätsschwellenwert} - \text{Grenzschwellenwert});$$

die auf der Grundlage der Universalnormierungs-Software und der Universalschaltentscheidungs-Software operierende Steuereinheit (6) Auswertungsparameter von der ersten und der zweiten Sende-/Empfangseinheit (3, 5) erfasst, um die erfassten Auswertungsparameter auf der Grundlage der Gleichung zu normieren;
für den Fall, dass der normierte Auswertungsparameter des zweiten Kommunikationssystems unter Erfassung kleiner als ein normierter Grenzschwellenwert ist, die Steuereinheit (6) die Fortsetzung der Sende-/Empfangsoperation auf der Grundlage des ersten Kommunikationssystems unter Kommunikation auswählt; und
für den Fall, dass der normierte Auswertungsparameter des zweiten Kommunikationssystems unter Erfassung gleich dem oder größer als der normierte Grenzschwellenwert ist, und der normierte Auswertungsparameter des ersten Kommunikationssystems unter Kommunikation kleiner als der normierte Grenzschwellenwert ist, die Steuereinheit (6) die Operation zum Schalten zu dem zweiten Kommunikationssystem unter Erfassung auswählt.

**12.** Drahtlose Mobilstationsvorrichtung nach Anspruch 11, bei der
die auf der Grundlage der Universalschaltentscheidungs-Software operierende Steuereinheit (6) eine Prioritätsreihenfolge zwischen dem ersten Kommunikationssystem unter Kommunikation und dem zweiten Kommunikationssystem unter Erfassung beurteilt durch Vergleichen der Prioritätsreihenfolgen miteinander für den Fall, dass der normierte Auswertungsparameter des zweiten Kommunikationssystems unter Erfassung gleich dem oder größer als der normierte Grenzschwellenwert ist, und der normierte Auswertungsparameter des ersten Kommunikationssystems unter Kommunikation gleich dem oder größer als der normierte Grenzschwellenwert ist;
für den Fall, dass die Prioritätsreihenfolge des ersten Kommunikationssystems unter Kommunikation höher ist, wenn der normierte Auswertungsparameter des ersten Kommunikationssystems unter Kommunikation gleich dem oder größer als der normierte Prioritätsschwellenwert ist, die Steuereinheit (6) die Fortsetzung der Sende-/Empfangsoperation durch das erste Kommunikationssystem unter Kommunikation auswählt; und
für den Fall, dass die Prioritätsreihenfolge des zweiten Kommunikationssystems unter Erfassung höher ist, wenn der normierte Auswertungsparameter des zweiten Kommunikationssystems unter Erfassung gleich dem oder größer als der normierte Prioritätsschwellenwert ist, die Steuereinheit (6) die Operation zum Schalten zu dem zweiten Kommunikationssystem unter Erfassung auswählt.

**13.** Drahtlose Mobilstationsvorrichtung nach Anspruch 12, bei der: für den Fall, dass der normierte Auswertungsparameter des ersten Kommunikationssystems unter Kommunikation kleiner als der normierte Prioritätsschwellenwert ist, oder für den Fall, dass der normierte Auswertungsparameter des zweiten Kommunikationssystems unter Erfassung kleiner als der normierte Prioritätsschwellenwert ist, die auf der Grundlage der Universalschaltentscheidungs-Software operierende Steuereinheit (6) den normierten Auswertungsparameter des ersten Kommunikationssystems unter Kommunikation mit dem normierten Auswertungsparameter des zweiten Kommunikationssystems unter Erfassung so vergleicht, dass die Operation zum Schalten zu dem zweiten Kommunikationssystem unter Erfassung ausgewählt wird oder die Fortsetzung der Sende-/Empfangsoperation auf der Grundlage des ersten Kommunikationssystems unter Kommunikation ausgewählt wird.

**14.** Kommunikationsschalt-Entscheidungsverfahren für eine drahtlose Mobilstationsvorrichtung, die mit zumindest einer ersten Sende-/Empfangseinheit (3) und einer zweiten Sende-/Empfangseinheit (5) ausgestattet ist, wobei die erste Sende-/Empfangseinheit (3) und die zweite Sende-/Empfangseinheit (5) jeweils Funktionen haben, die durch Neuschreiben von Software geändert werden können,
welches Kommunikationsschalt-Entscheidungsverfahren den Schritt des Durchführens eines abwechselnden Schaltens zwischen einer Sende-/Empfangsfunktion und einer Kommunikationsgegenstations-Erfassungsfunktion von mehreren Kommunikationssystemen auf der Grundlage von Schaltauswertungsdaten durch eine Schaltentscheidungsfunktion zum konstanten Zuweisen der Sende-/Empfangsfunktion zu einer von der ersten und der zweiten Sende-/Empfangseinheit (3, 5) aufweist,
wobei die Schaltauswertungsdaten gebildet sind aus einem Auswertungsparameter zum Vorhersagen einer Kommunikationsqualität eines Kommunikationssystems, und sowohl einem Grenzschwellenwert als auch einem Prioritätsschwellenwert, die zum Entscheiden über das Schalten zwischen den Kommunikationssystemen verwendet werden.

**15.** Kommunikationsschalt-Entscheidungsverfahren nach Anspruch 14, bei dem die Schaltentscheidungsfunktion die Schritte enthält:

Erfassen von Auswertungsparametern, die auf das erste und das zweite Kommunikationssystem bezogen sind;
Entscheiden über das Schalten zwischen dem ersten und dem zweiten Kommunikationssystem durch Vergleichen der Auswertungsparameter mit dem Grenzschwellenwert;
Entscheiden über das Schalten zwischen dem ersten und dem zweiten Kommunikationssystem durch Vergleichen der Auswertungsparameter mit dem Prioritätsschwellenwert; und
Entscheiden über das Schalten zwischen dem ersten und dem zweiten Kommunikationssystem durch Vergleichen der Auswertungsparameter miteinander.

**16.** Kommunikationsschalt-Entscheidungsverfahren nach Anspruch 14, bei dem:

der Zuweisungsschritt den Schritt des Normierens der Auswertungsparameter enthält; und
die Schaltentscheidungsfunktion die Schritte enthält:

Erfassen normierter Auswertungsparameter, die auf das erste und das zweite Kommunikationssystem bezogen sind;
Entscheiden über das Schalten zwischen dem ersten und dem zweiten Kommunikationssystem durch Vergleichen der normierten Auswertungsparameter mit dem Grenzschwellenwert;
Entscheiden über das Schalten zwischen dem ersten und dem zweiten Kommunikationssystem durch Vergleichen der normierten Auswertungsparameter mit dem Prioritätsschwellenwert; und
Entscheiden über das Schalten zwischen dem ersten und dem zweiten Kommunikationssystem durch Vergleichen der normierten Auswertungsparameter miteinander.

**17.** Kommunikationsschalt-Entscheidungsverfahren nach Anspruch 14, bei dem die Schaltentscheidungsfunktion die Schritte enthält:

Erfassen von Auswertungsparametern, die auf das erste und das zweite Kommunikationssystem bezogen sind;
Normieren der Auswertungsparameter;
Entscheiden über das Schalten zwischen dem ersten und dem zweiten Kommunikationssystem durch Vergleichen der normierten Auswertungsparameter mit dem normierten Grenzschwellenwert;
Entscheiden über das Schalten zwischen dem ersten und dem zweiten Kommunikationssystem durch Vergleichen der normierten Auswertungsparameter mit dem normierten Prioritätsschwellenwert; und
Entscheiden über das Schalten zwischen dem ersten und dem zweiten Kommunikationssystem durch Vergleichen der normierten Auswertungsparameter miteinander.

## Revendications

**1.** Appareil de station mobile sans fil, équipé d'au moins une première unité d'émission / réception (3) et d'une deuxième unité d'émission / réception (5), la première unité d'émission / réception (3) et la deuxième unité d'émission / réception (5) présentant chacune des fonctions qui peuvent être modifiées en réinscrivant le logiciel ;
l'appareil de station mobile sans fil comprenant une unité de commande (6) destinée à exécuter une commutation alternée entre une fonction d'émission / réception et une fonction de détection de station de communication homologue d'une pluralité de systèmes de communication par une fonction de décision de commutation, de manière à attribuer sans cesse la fonction d'émission / réception à l'une des première et deuxième unités d'émission / réception (3, 5).

2. Appareil de station mobile sans fil selon la revendication 1, comprenant en outre une unité de stockage (7) destinée à stocker à l'intérieur au moins :

   un premier ensemble de logiciel d'émission / réception utilisé dans les opérations d'émission / réception d'après un premier système de communication ;
   un deuxième ensemble de logiciel d'émission / réception utilisé dans les opérations d'émission / réception sur la base d'un deuxième système de communication ;
   un logiciel de détection de station de communication homologue destiné à détecter une station de communication homologue dans le deuxième système de communication ; et
   un logiciel de décision de commutation destiné à décider une commutation entre les systèmes de communication selon une combinaison des premier et deuxième systèmes de communication ; dans lequel :

      l'unité de commande (6) lit le premier ensemble de logiciel d'émission / réception de manière à inscrire dans la première unité d'émission / réception (3) le premier ensemble de logiciel d'émission / réception lu, déclenche la première unité d'émission / réception (3) de manière à commencer des opérations d'émission / réception sur la base du premier système de communication, et lit le logiciel de détection de station de communication homologue à partir de l'unité de stockage (7) de manière à inscrire dans la deuxième unité d'émission / réception (5) le logiciel de détection de station de communication homologue lu, et déclenche la deuxième unité d'émission / réception (5) de manière à commencer une opération de détection d'une station de communication homologue sur la base du deuxième système de communication ;
      l'unité de commande (6) lit le logiciel de décision de commutation de manière interne à partir de l'unité de stockage (7), et déclenche le logiciel de décision de commutation de manière à décider une commutation entre les systèmes de communication sur la base de données d'évaluation de commutation ;
      dans le cas où une opération destinée à commuter vers le deuxième système de communication est sélectionnée, l'unité de commande (6) lit le deuxième ensemble de logiciel d'émission / réception à partir de l'unité de stockage (7) de manière à inscrire dans la deuxième unité d'émission / réception (5) le deuxième ensemble de logiciel d'émission / réception lu, et déclenche la deuxième unité d'émission / réception (5) de manière à commencer les opérations d'émission / réception sur la base du deuxième système de communication.

3. Appareil de station mobile sans fil selon la revendication 2, dans lequel :

   les données d'évaluation de commutation sont constituées de paramètres d'évaluation destinés à prévoir les qualités de communication des premier et deuxième systèmes de communication, d'une valeur de seuil de coupure et d'une valeur de seuil de priorité pour une opération de décision de commutation, et d'un ordre de priorité d'application entre les premier et deuxième systèmes de communication ;
   l'unité de commande (6) actionnée sur la base du logiciel de décision de commutation acquiert des paramètres d'évaluation en provenance des première et deuxième unités d'émission / réception (3, 5), et dans le cas où le paramètre d'évaluation du deuxième système de communication en cours de détection est inférieur à la valeur de seuil de coupure, l'unité de commande (6) sélectionne une poursuite de l'opération d'émission / réception sur la base du premier système de communication en cours de communication ; et
   dans le cas où le paramètre d'évaluation du deuxième système de communication en cours de détection est égal ou supérieur à la valeur de seuil de coupure, et où le paramètre d'évaluation du premier système de communication en cours de communication est inférieur à la valeur de seuil de coupure, l'unité de commande (6) sélectionne une opération destinée à commuter vers le deuxième système de communication en cours de détection.

4. Appareil de station mobile sans fil selon la revendication 3, dans lequel :

   l'unité de commande (6) actionnée sur la base du logiciel de décision de commutation juge un ordre de priorité entre le premier système de communication en cours de communication et le deuxième système de communication en cours de détection en comparant les ordres de priorité les uns avec les autres, dans le cas où le paramètre d'évaluation du deuxième système de communication en cours de détection est égal ou supérieur à la valeur de seuil de coupure, et où le paramètre d'évaluation du premier système de communication en cours de communication est égal ou supérieur à la valeur de seuil de coupure ;

dans le cas où l'ordre de priorité du premier système de communication en cours de communication est plus élevé, lorsque le paramètre d'évaluation du premier système de communication en cours de communication est égal ou supérieur à la valeur de seuil de priorité, l'unité de commande (6) sélectionne la poursuite de l'opération d'émission / réception par le premier système de communication en cours de communication ; et
dans le cas où l'ordre de priorité du deuxième système de communication en cours de détection est plus élevé, lorsque le paramètre d'évaluation du deuxième système de communication en cours de détection est égal ou supérieur à la valeur de seuil de priorité, l'unité de commande (6) sélectionne l'opération destinée à commuter vers le deuxième système de communication en cours de détection.

**5.** Appareil de station mobile sans fil selon la revendication 4, dans lequel dans le cas où le paramètre d'évaluation du premier système de communication en cours de communication est inférieur à la valeur de seuil de priorité, ou dans le cas où le paramètre d'évaluation du deuxième système de communication en cours de détection est inférieur à la valeur de seuil de priorité, l'unité de commande (6) actionnée sur la base du logiciel de décision de commutation compare le paramètre d'évaluation du premier système de communication en cours de communication avec le paramètre d'évaluation du deuxième système de communication en cours de détection de manière à sélectionner l'opération destinée à commuter vers le deuxième système de communication en cours de détection, ou à sélectionner la poursuite de l'opération d'émission / réception sur la base du premier système de communication en cours de communication.

**6.** Appareil de station mobile sans fil selon la revendication 1, comprenant en outre une unité de stockage (7) destinée à stocker à l'intérieur au moins :

un premier ensemble de logiciel d'émission / réception utilisé dans les opérations d'émission / réception sur la base d'un premier système de communication ;
un deuxième ensemble de logiciel d'émission / réception utilisé dans les opérations d'émission / réception sur la base d'un deuxième système de communication ;
un logiciel de détection de station de communication homologue destiné à détecter une station de communication homologue dans le deuxième système de communication ;
un premier ensemble de logiciel de normalisation destiné à normaliser un paramètre d'évaluation acquis sur la base du premier système de communication, et un deuxième ensemble de logiciel de normalisation destiné à normaliser un paramètre d'évaluation acquis sur la base du deuxième système de communication, dans lequel :

l'unité de commande (6) lit le premier ensemble de logiciel d'émission / réception et le premier ensemble de logiciel de normalisation de manière à inscrire dans la première unité d'émission / réception (3) le premier ensemble de logiciel d'émission / réception et le premier ensemble de logiciel de normalisation lus, déclenche la première unité d'émission / réception (3) de manière à commencer les opérations d'émission / réception sur la base du premier système de communication, et à normaliser le paramètre d'évaluation acquis ;
l'unité de commande (6) lit le deuxième ensemble de logiciel de normalisation et le logiciel de détection de station de communication homologue à partir de l'unité de stockage (7) de manière à inscrire dans la deuxième unité d'émission / réception (5) le deuxième ensemble de logiciel de normalisation et le logiciel de détection de station de communication homologue lus, et déclenche la deuxième unité d'émission / réception (5) de manière à commencer une opération de détection d'une station de communication homologue sur la base du deuxième système de communication, et à normaliser le paramètre d'évaluation acquis ;
l'unité de commande (6) déclenche un logiciel de décision de commutation universel destiné à décider une commutation entre les systèmes de communication selon une combinaison constituée de différents systèmes de communication de manière à décider une commutation entre les systèmes de communication sur la base des données d'évaluation de commutation ; et
dans le cas où une opération destinée à commuter vers le deuxième système de communication est sélectionnée, l'unité de commande (4, 6) lit le deuxième ensemble de logiciel d'émission / réception et le premier ensemble de logiciel de normalisation à partir de l'unité de stockage (7) de manière à inscrire dans la deuxième unité d'émission / réception (5) le deuxième ensemble de logiciel d'émission / réception et le premier ensemble de logiciel de normalisation lus, et déclenche la deuxième unité d'émission / réception (5) de manière à commencer les opérations d'émission / réception sur la base du deuxième système de communication.

**7.** Appareil de station mobile sans fil selon la revendication 6, dans lequel :

les données d'évaluation de commutation sont constituées de paramètres d'évaluation normalisés destinés à prévoir les qualités de communication des premier et deuxième systèmes de communication, d'une valeur de seuil de coupure et d'une valeur de seuil de priorité pour une opération de décision de commutation, et d'un ordre de priorité d'application entre les premier et deuxième systèmes de communication ;
le paramètre d'évaluation normalisé est obtenu à partir de l'équation suivante, en supposant qu'une valeur maximum et une valeur minimum parmi des valeurs disponibles en tant que paramètres d'évaluation sont fixées en tant que valeur limite supérieure et valeur limite inférieure :

paramètre d'évaluation normalisé = (paramètre d'évaluation – valeur limite inférieure) / (valeur limite supérieure – valeur limite inférieure) ;

l'unité de commande (6) actionnée sur la base du logiciel de décision de commutation universel acquiert des paramètres d'évaluation normalisés en provenance des première et deuxième unités d'émission / réception (3, 5), et lorsque le paramètre d'évaluation normalisé du deuxième système de communication en cours de détection est inférieur à la valeur de seuil de coupure, l'unité de commande (6) sélectionne la poursuite de l'opération d'émission / réception sur la base du premier système de communication en cours de communication ; et
dans le cas où le paramètre d'évaluation normalisé du deuxième système de communication en cours de détection est égal ou supérieur à la valeur de seuil de coupure et où le paramètre d'évaluation normalisé du premier système de communication en cours de communication est inférieur à la valeur de seuil de coupure, l'unité de commande (6) sélectionne une opération destinée à commuter vers le deuxième système de communication en cours de détection.

**8.** Appareil de station mobile sans fil selon la revendication 7, dans lequel :

l'unité de commande (6) actionnée sur la base du logiciel de décision de commutation universel juge un ordre de priorité entre le premier système de communication en cours de communication et le deuxième système de communication en cours de détection en comparant les ordres de priorité les uns avec les autres, dans le cas où le paramètre d'évaluation normalisé du deuxième système de communication en cours de détection est égal ou supérieur à la valeur de seuil de coupure, et où le paramètre d'évaluation normalisé du premier système de communication en cours de communication est égal ou supérieur à la valeur de seuil de coupure ;
dans le cas où l'ordre de priorité du premier système de communication en cours de communication est plus élevé, lorsque le paramètre d'évaluation normalisé du premier système de communication en cours de communication est égal ou supérieur à la valeur de seuil de priorité, l'unité de commande (6) sélectionne la poursuite de l'opération d'émission / réception par le premier système de communication en cours de communication ; et
dans le cas où l'ordre de priorité du deuxième système de communication en cours de détection est plus élevé, lorsque le paramètre d'évaluation normalisé du deuxième système de communication en cours de détection est égal ou supérieur à la valeur de seuil de priorité, l'unité de commande sélectionne l'opération destinée à commuter vers le deuxième système de communication en cours de détection.

**9.** Appareil de station mobile sans fil selon la revendication 8, dans lequel dans le cas où le paramètre d'évaluation normalisé du premier système de communication en cours de communication est inférieur à la valeur de seuil de priorité, ou dans le cas où le paramètre d'évaluation normalisé du deuxième système de communication en cours de détection est inférieur à la valeur de seuil de priorité, l'unité de commande (6) actionnée sur la base du logiciel de décision de commutation universel compare le paramètre d'évaluation normalisé du premier système de communication en cours de communication avec le paramètre d'évaluation normalisé du deuxième système de communication en cours de détection de manière à sélectionner l'opération de commutation vers le deuxième système de communication en cours de détection, ou à sélectionner la poursuite de l'opération d'émission / réception sur la base du premier système de communication en cours de communication.

**10.** Appareil de station mobile sans fil selon la revendication 1, comprenant en outre une unité de stockage (7) destinée à stocker à l'intérieur au moins :

un premier ensemble de logiciel d'émission / réception utilisé dans les opérations d'émission / réception sur la base d'un premier système de communication ;
un deuxième ensemble de logiciel d'émission / réception utilisé dans les opérations d'émission / réception sur la base d'un deuxième système de communication ; et

un logiciel de détection de station de communication homologue destiné à détecter une station de communication homologue dans le deuxième système de communication ; dans lequel :

l'unité de commande (6) lit le premier ensemble de logiciel d'émission / réception de manière à inscrire dans la première unité d'émission / réception (3) le premier ensemble de logiciel d'émission / réception lu, déclenche la première unité d'émission / réception (3) de manière à commencer des opérations d'émission / réception sur la base du premier système de communication, et lit le logiciel de détection de station de communication homologue à partir de l'unité de stockage (7) de manière à inscrire dans la deuxième unité d'émission / réception (5) le logiciel de détection de station de communication homologue lu, et déclenche la deuxième unité d'émission / réception (5) de manière à commencer une opération de détection d'une station de communication homologue sur la base du deuxième système de communication ;
l'unité de commande (6) déclenche un logiciel de normalisation universel destiné à normaliser des paramètres d'évaluation de différents systèmes de communication, et un logiciel de décision de commutation universel destiné à décider une commutation entre les systèmes de communication selon une combinaison constituée de différents systèmes de communication de manière à décider une commutation entre les systèmes de communication sur la base des données d'évaluation de commutation ; et
dans le cas où une opération destinée à commuter vers le deuxième système de communication est sélectionnée, l'unité de commande (6) lit le deuxième ensemble de logiciel d'émission / réception à partir de l'unité de stockage (7) de manière à inscrire dans la deuxième unité d'émission / réception (5) le deuxième ensemble de logiciel d'émission / réception lu, et déclenche la deuxième unité d'émission / réception (5) de manière à commencer les opérations d'émission / réception sur la base du deuxième système de communication.

**11.** Appareil de station mobile sans fil selon la revendication 10, dans lequel :

les données d'évaluation de commutation sont constituées des paramètres d'évaluation normalisés destinés à prévoir les qualités de communication des premier et deuxième systèmes de communication, une valeur de seuil de coupure et une valeur de seuil de priorité pour une opération de décision de commutation, et d'un ordre de priorité d'application entre les premier et deuxième systèmes de communication ;
le paramètre d'évaluation normalisé est obtenu à partir de l'équation suivante :

$$\text{paramètre d'évaluation normalisé} = (\text{paramètre d'évaluation} - \text{valeur de seuil de coupure}) / (\text{valeur de seuil de priorité} - \text{valeur de seuil de coupure}) ;$$

l'unité de commande (6) actionnée sur la base du logiciel de normalisation universel et du logiciel de décision de commutation universel, acquiert des paramètres d'évaluation en provenance des première et deuxième unités d'émission / réception (3, 5) de manière à normaliser les paramètres d'évaluation acquis sur la base de l'équation ;
dans le cas où le paramètre d'évaluation normalisé du deuxième système de communication en cours de détection est inférieur à une valeur de seuil de coupure normalisée, l'unité de commande 16) sélectionne la poursuite de l'opération d'émission / réception sur la base du premier système de communication en cours de communication ; et
dans le cas où le paramètre d'évaluation normalisé du deuxième système de communication en cours de détection est égal ou supérieur à la valeur de seuil de coupure normalisée et où le paramètre d'évaluation normalisé du premier système de communication en cours de communication est inférieur à la valeur de seuil de coupure normalisée, l'unité de commande (6) sélectionne l'opération destinée à commuter vers le deuxième système de communication en cours de détection.

**12.** Appareil de station mobile sans fil selon la revendication 11, dans lequel :

l'unité de commande (6) actionnée sur la base du logiciel de décision de commutation universel évalue un ordre de priorité entre le premier système de communication en cours de communication et le deuxième système de communication en cours de détection, en comparant les ordres de priorité les uns avec les autres, dans le cas où le paramètre d'évaluation normalisé du deuxième système de communication en cours de détection est égal ou supérieur à la valeur de seuil de coupure normalisée, et où le paramètre d'évaluation normalisé du premier système de communication en cours de communication est égal ou supérieur à la valeur de seuil de coupure normalisée ;
dans le cas où l'ordre de priorité du premier système de communication en cours de communication est plus élevé, lorsque le paramètre d'évaluation normalisé du premier système de communication en cours de communication est égal ou supérieur à la valeur de seuil de priorité normalisée, l'unité de commande (6) sélectionne la poursuite de l'opération d'émission / réception par le premier système de communication en cours de communication ; et
dans le cas où l'ordre de priorité du deuxième système de communication en cours de détection est plus élevé, lorsque le paramètre d'évaluation normalisé du deuxième système de communication en cours de détection est égal ou supérieur à la valeur de seuil de priorité normalisée, l'unité de commande (6) sélectionne l'opération destinée à commuter vers le deuxième système de communication en cours de détection.

**13.** Appareil de station mobile sans fil selon la revendication 12, dans lequel :

dans le cas où le paramètre d'évaluation normalisé du premier système de communication en cours de communication est inférieur à la valeur de seuil de priorité normalisée, ou dans le cas où le paramètre d'évaluation normalisé du deuxième système de communication en cours de détection est inférieur à la valeur de seuil de priorité normalisée, l'unité de commande (6) actionnée sur la base du logiciel de décision de commutation universel compare le paramètre d'évaluation normalisé du premier système de communication en cours de communication avec le paramètre d'évaluation normalisé du deuxième système de communication en cours de détection de manière à sélectionner l'opération destinée à commuter vers le deuxième système de communication en cours de détection, ou à sélectionner la poursuite de l'opération d'émission / réception sur la base du premier système de communication en cours de communication.

**14.** Procédé de décision de commutation de communication d'un appareil de station mobile sans fil, équipé d'au moins une première unité d'émission / réception (3) et d'une deuxième unité d'émission / réception (5), la première unité d'émission / réception (3) et la deuxième unité d'émission / réception (5) présentant chacune des fonctions qui peuvent être modifiées en réinscrivant le logiciel ;
le procédé de décision de commutation de communication comprenant une étape consistant à exécuter une commutation alternée entre une fonction d'émission / réception et une fonction de détection de station de communication homologue d'une pluralité de systèmes de communication sur la base de données d'évaluation de commutation par une fonction de décision de commutation, de manière à attribuer sans cesse la fonction d'émission / réception à l'une des première et deuxième unités d'émission / réception (3, 5) ;
dans lequel les données d'évaluation de commutation sont constituées d'un paramètre d'évaluation destiné à prévoir une qualité de communication d'un système de communication, et une valeur de seuil de coupure et une valeur de seuil de priorité qui sont utilisées pour décider une commutation entre les systèmes de communication.

**15.** Procédé de décision de commutation de communication selon la revendication 14, dans lequel la fonction de décision de commutation comprend les étapes consistant à :

acquérir des paramètres d'évaluation qui se rapportent à des premier et deuxième systèmes de communication ;
décider une commutation entre les premier et deuxième systèmes de communication en comparant les paramètres d'évaluation à la valeur de seuil de coupure ;
décider une commutation entre les premier et deuxième systèmes de communication en comparant les paramètres d'évaluation à la valeur de seuil de priorité ; et
décider une commutation entre les premier et deuxième systèmes de communication en comparant les paramètres d'évaluation les uns avec les autres.

**16.** Procédé de décision de commutation de communication selon la revendication 14, dans lequel :

l'étape d'attribution comprend une étape consistant à normaliser les paramètres d'évaluation ; et
la fonction de décision de commutation comprend les étapes consistant à :

acquérir des paramètres d'évaluation normalisés qui se rapportent à des premier et deuxième systèmes de communication ;
décider une commutation entre les premier et deuxième systèmes de communication en comparant les paramètres d'évaluation normalisés à la valeur de seuil de coupure ;
décider une commutation entre les premier et deuxième systèmes de communication en comparant les paramètres d'évaluation normalisés à la valeur de seuil de priorité ; et
décider une commutation entre les premier et deuxième systèmes de communication en comparant les paramètres d'évaluation normalisés les uns avec les autres.

**17.** Procédé de décision de commutation de communication selon la revendication 14, dans lequel la fonction de décision de commutation comprend les étapes consistant à :

acquérir des paramètres d'évaluation qui se rapportent à des premier et deuxième systèmes de communication ;
normaliser les paramètres d'évaluation ;
décider une commutation entre les premier et deuxième systèmes de communication en comparant les paramètres d'évaluation normalisés à la valeur de seuil de coupure normalisée ;
décider une commutation entre les premier et deuxième systèmes de communication en comparant les paramètres d'évaluation normalisés à la valeur de seuil de priorité normalisée ; et
décider une commutation entre les premier et deuxième systèmes de communication en comparant les paramètres d'évaluation normalisés les uns avec les autres.

FIG. 1

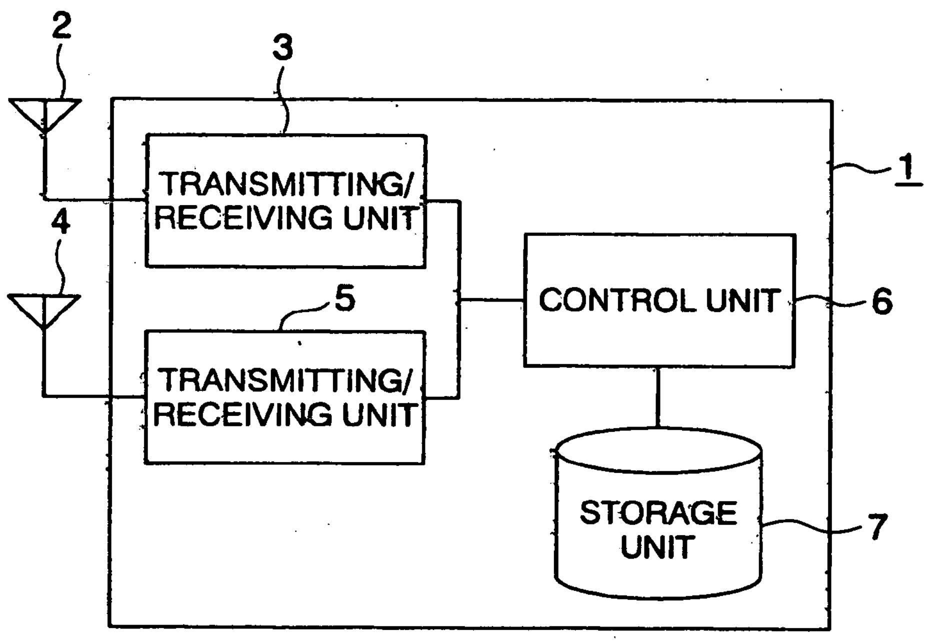
2
3
1
TRANSMITTING/
RECEIVING UNIT
4
5
CONTROL UNIT
6
TRANSMITTING/
RECEIVING UNIT
STORAGE
UNIT
7

FIG. 2

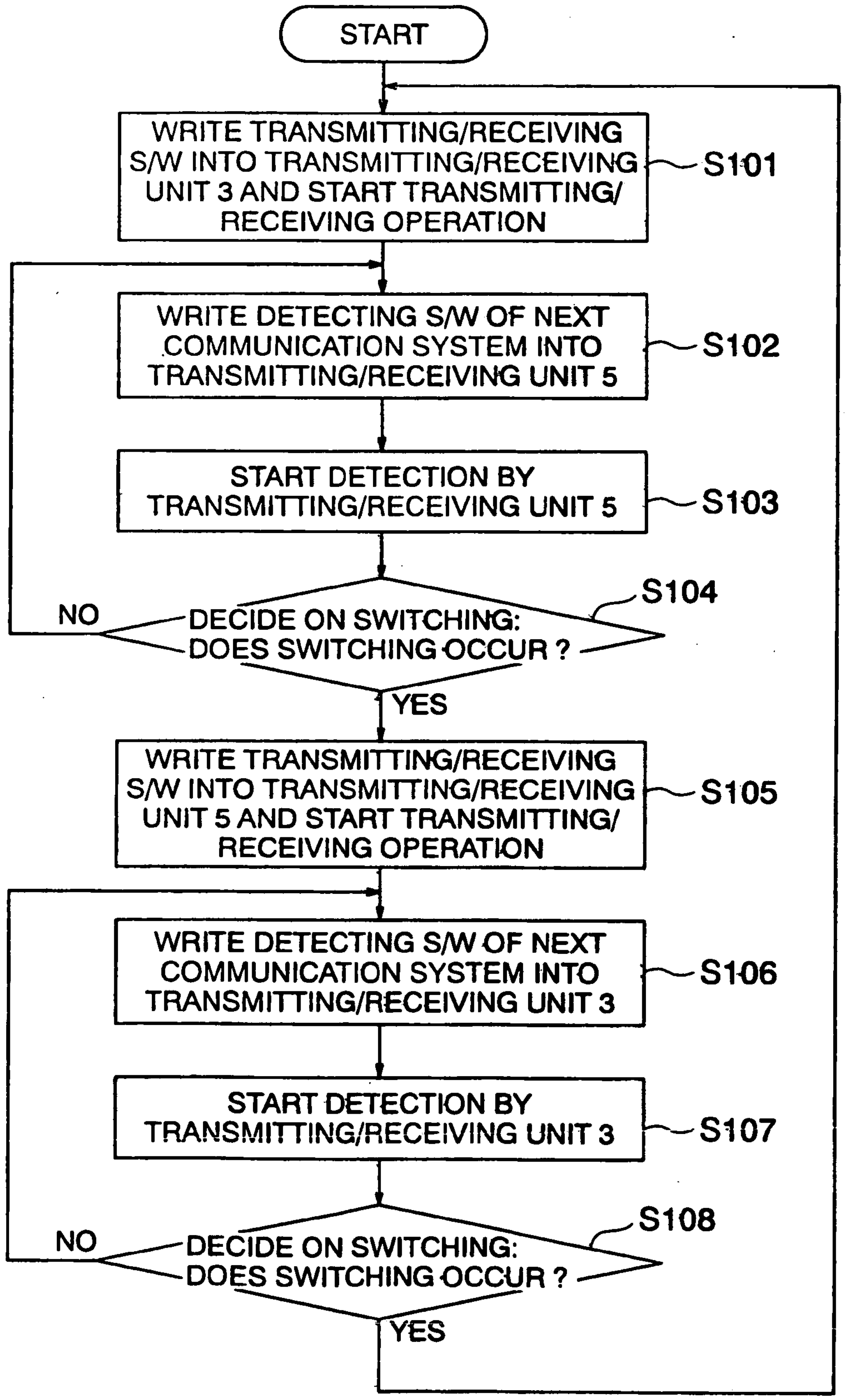
START
WRITE TRANSMITTING/RECEIVING S/W INTO TRANSMITTING/RECEIVING UNIT 3 AND START TRANSMITTING/ RECEIVING OPERATION
S101
WRITE DETECTING S/W OF NEXT COMMUNICATION SYSTEM INTO TRANSMITTING/RECEIVING UNIT 5
S102
START DETECTION BY TRANSMITTING/RECEIVING UNIT 5
S103
DECIDE ON SWITCHING: DOES SWITCHING OCCUR ?
S104
NO
YES
WRITE TRANSMITTING/RECEIVING S/W INTO TRANSMITTING/RECEIVING UNIT 5 AND START TRANSMITTING/ RECEIVING OPERATION
S105
WRITE DETECTING S/W OF NEXT COMMUNICATION SYSTEM INTO TRANSMITTING/RECEIVING UNIT 3
S106
START DETECTION BY TRANSMITTING/RECEIVING UNIT 3
S107
DECIDE ON SWITCHING: DOES SWITCHING OCCUR ?
S108
NO
YES

FIG. 3

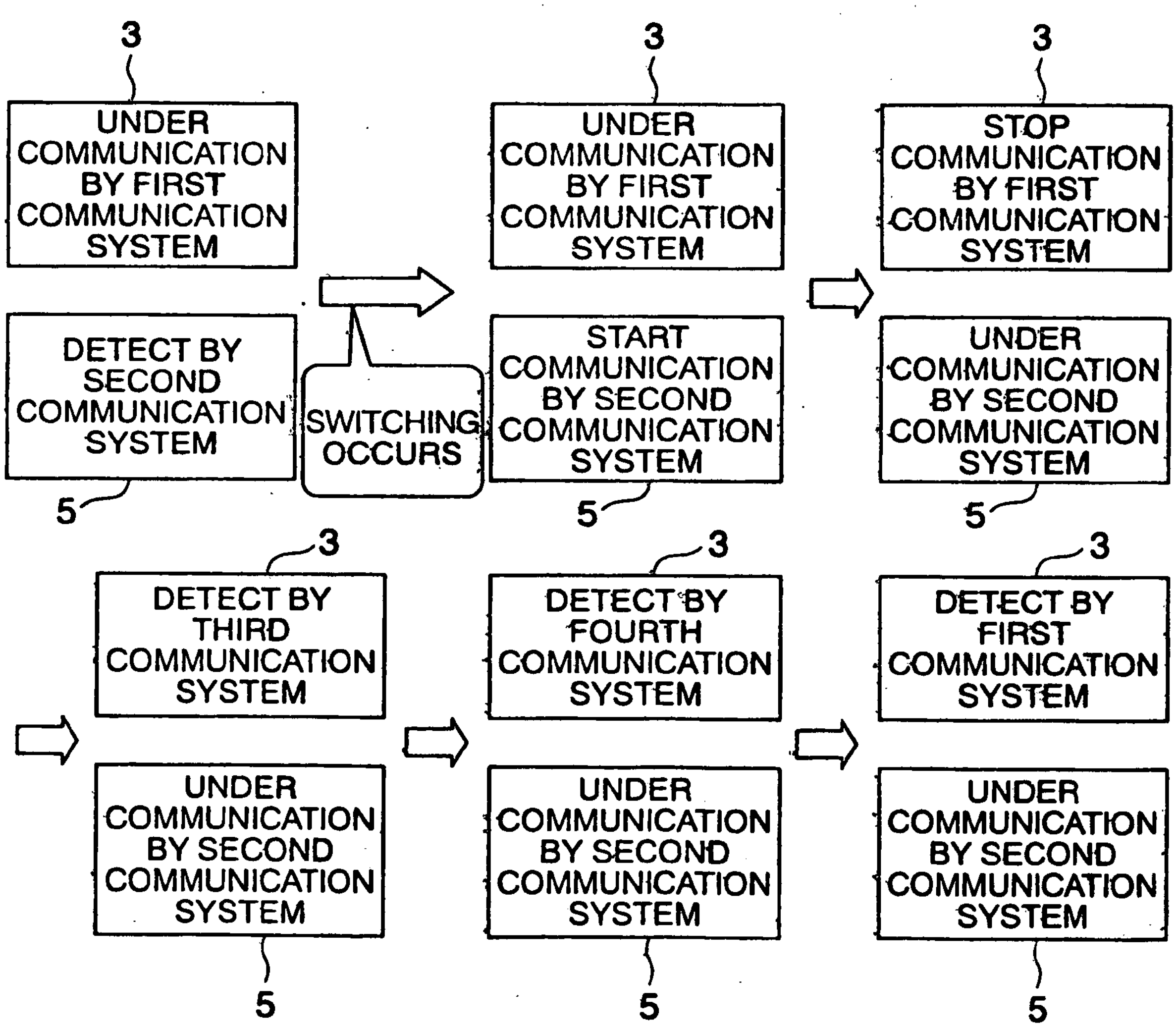
3
UNDER COMMUNICATION BY FIRST COMMUNICATION SYSTEM
DETECT BY SECOND COMMUNICATION SYSTEM
5
SWITCHING OCCURS
3
UNDER COMMUNICATION BY FIRST COMMUNICATION SYSTEM
START COMMUNICATION BY SECOND COMMUNICATION SYSTEM
5
3
STOP COMMUNICATION BY FIRST COMMUNICATION SYSTEM
UNDER COMMUNICATION BY SECOND COMMUNICATION SYSTEM
5
3
DETECT BY THIRD COMMUNICATION SYSTEM
UNDER COMMUNICATION BY SECOND COMMUNICATION SYSTEM
5
3
DETECT BY FOURTH COMMUNICATION SYSTEM
UNDER COMMUNICATION BY SECOND COMMUNICATION SYSTEM
5
3
DETECT BY FIRST COMMUNICATION SYSTEM
UNDER COMMUNICATION BY SECOND COMMUNICATION SYSTEM
5

FIG. 4

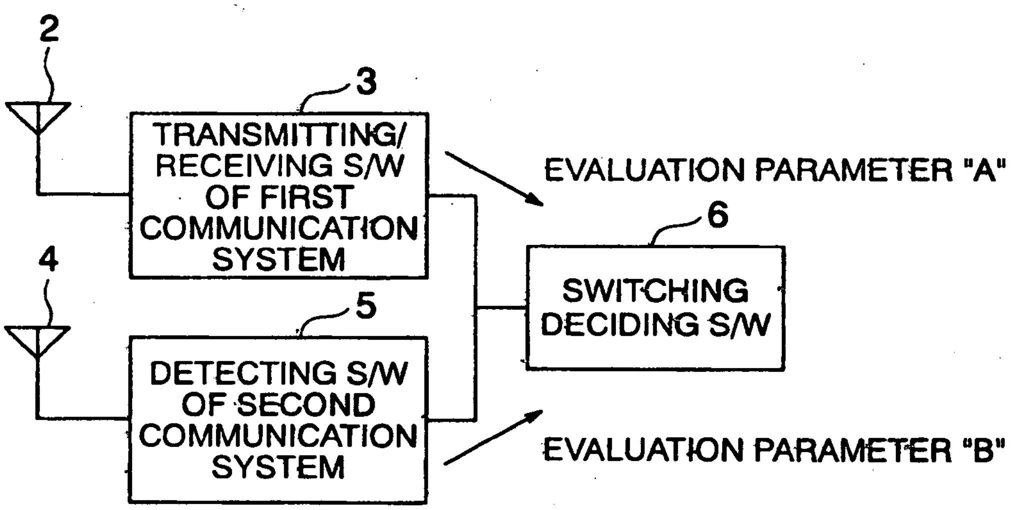
2
3
TRANSMITTING/ RECEIVING S/W OF FIRST COMMUNICATION SYSTEM
EVALUATION PARAMETER "A"
6
SWITCHING DECIDING S/W
4
5
DETECTING S/W OF SECOND COMMUNICATION SYSTEM
EVALUATION PARAMETER "B"

FIG. 5

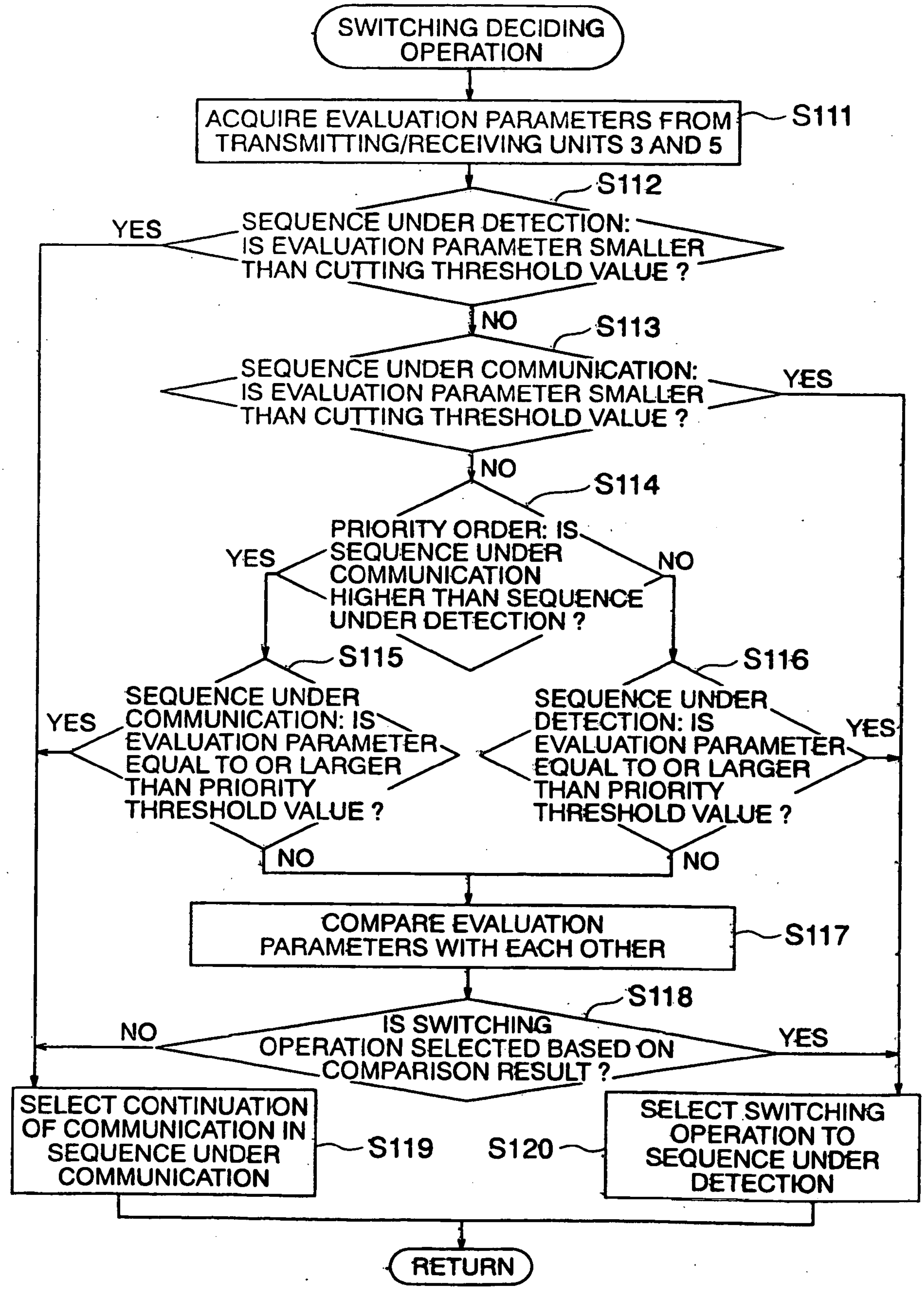
SWITCHING DECIDING OPERATION
ACQUIRE EVALUATION PARAMETERS FROM TRANSMITTING/RECEIVING UNITS 3 AND 5
S111
S112
SEQUENCE UNDER DETECTION: IS EVALUATION PARAMETER SMALLER THAN CUTTING THRESHOLD VALUE ?
YES
NO
S113
SEQUENCE UNDER COMMUNICATION: IS EVALUATION PARAMETER SMALLER THAN CUTTING THRESHOLD VALUE ?
YES
NO
S114
PRIORITY ORDER: IS SEQUENCE UNDER COMMUNICATION HIGHER THAN SEQUENCE UNDER DETECTION ?
YES
NO
S115
SEQUENCE UNDER COMMUNICATION: IS EVALUATION PARAMETER EQUAL TO OR LARGER THAN PRIORITY THRESHOLD VALUE ?
YES
NO
S116
SEQUENCE UNDER DETECTION: IS EVALUATION PARAMETER EQUAL TO OR LARGER THAN PRIORITY THRESHOLD VALUE ?
YES
NO
COMPARE EVALUATION PARAMETERS WITH EACH OTHER
S117
S118
IS SWITCHING OPERATION SELECTED BASED ON COMPARISON RESULT ?
NO
YES
SELECT CONTINUATION OF COMMUNICATION IN SEQUENCE UNDER COMMUNICATION
S119
S120
SELECT SWITCHING OPERATION TO SEQUENCE UNDER DETECTION
RETURN

FIG. 6

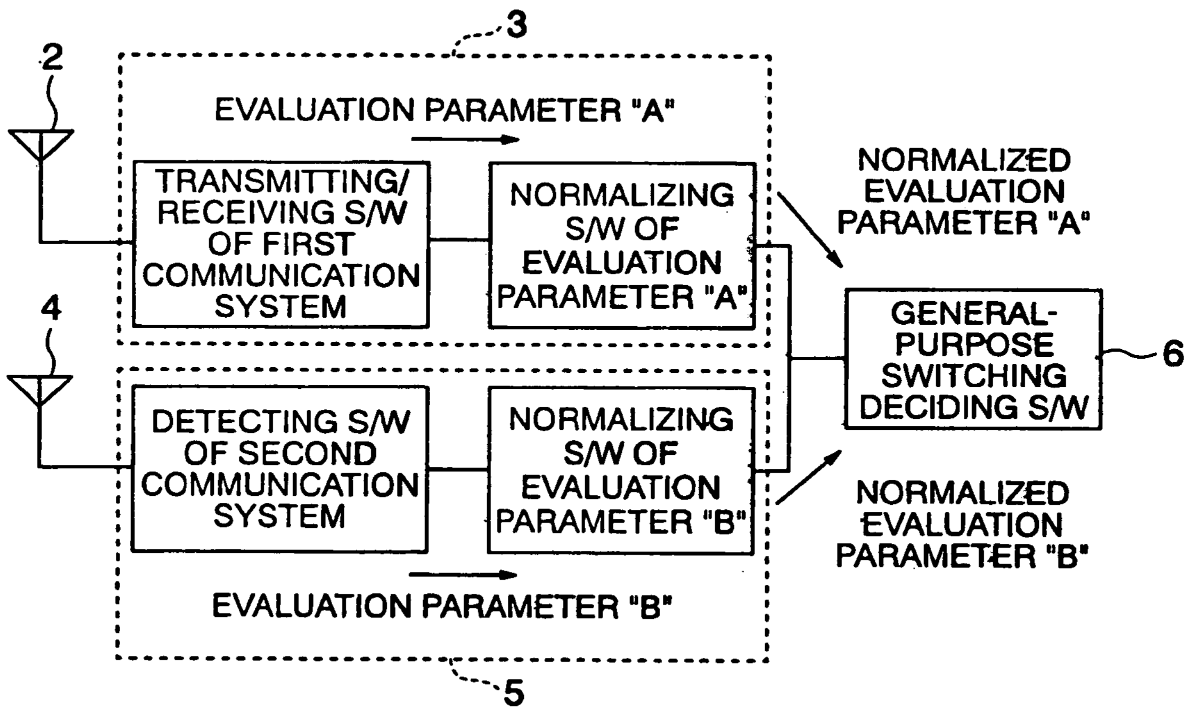
3
2
EVALUATION PARAMETER "A"
TRANSMITTING/ RECEIVING S/W OF FIRST COMMUNICATION SYSTEM
NORMALIZING S/W OF EVALUATION PARAMETER "A"
NORMALIZED EVALUATION PARAMETER "A"
4
GENERAL-PURPOSE SWITCHING DECIDING S/W
6
DETECTING S/W OF SECOND COMMUNICATION SYSTEM
NORMALIZING S/W OF EVALUATION PARAMETER "B"
NORMALIZED EVALUATION PARAMETER "B"
EVALUATION PARAMETER "B"
5

FIG. 7

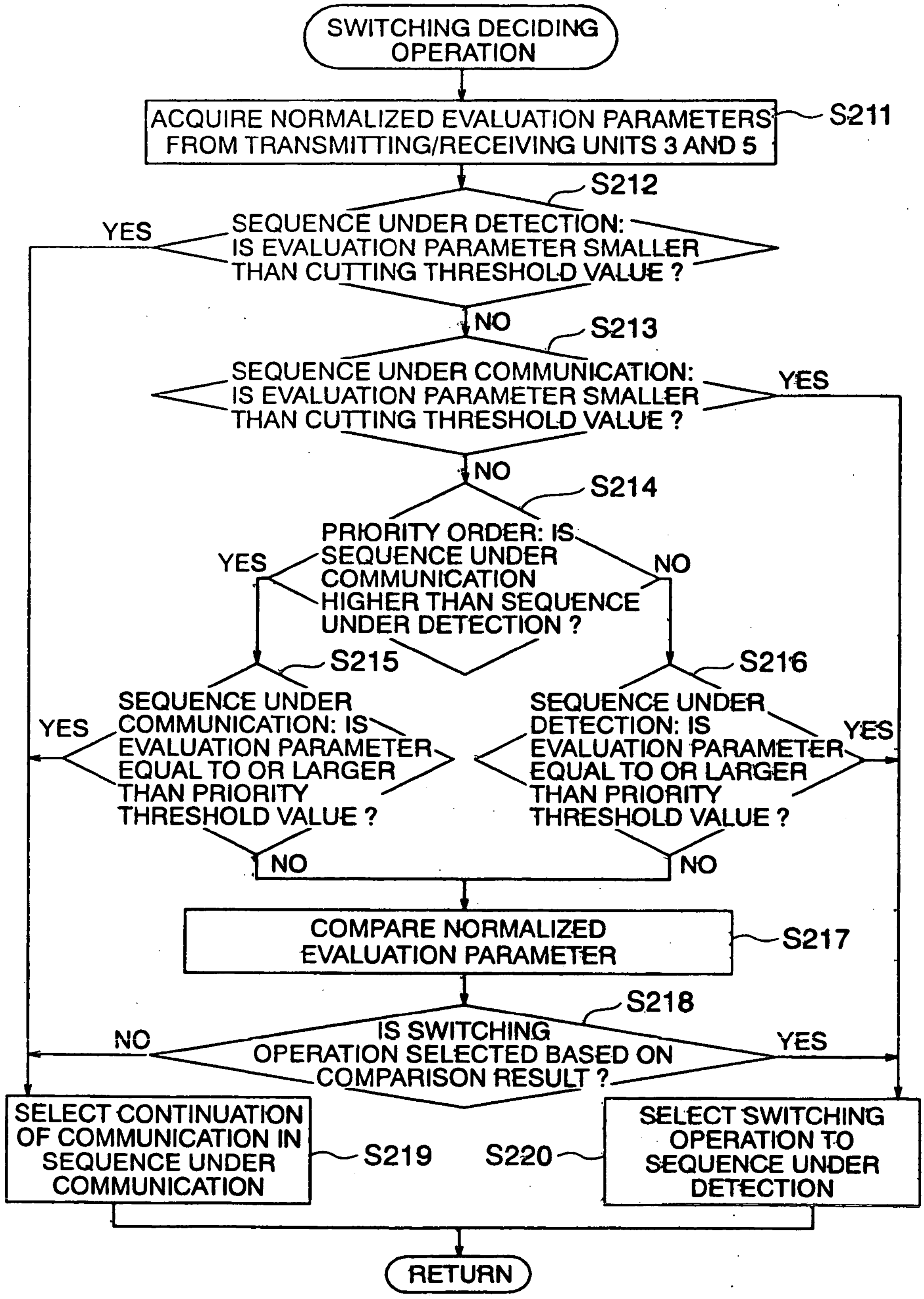
SWITCHING DECIDING OPERATION
ACQUIRE NORMALIZED EVALUATION PARAMETERS FROM TRANSMITTING/RECEIVING UNITS 3 AND 5
S211
S212
SEQUENCE UNDER DETECTION: IS EVALUATION PARAMETER SMALLER THAN CUTTING THRESHOLD VALUE ?
YES
NO
S213
SEQUENCE UNDER COMMUNICATION: IS EVALUATION PARAMETER SMALLER THAN CUTTING THRESHOLD VALUE ?
YES
NO
S214
PRIORITY ORDER: IS SEQUENCE UNDER COMMUNICATION HIGHER THAN SEQUENCE UNDER DETECTION ?
YES
NO
S215
SEQUENCE UNDER COMMUNICATION: IS EVALUATION PARAMETER EQUAL TO OR LARGER THAN PRIORITY THRESHOLD VALUE ?
YES
NO
S216
SEQUENCE UNDER DETECTION: IS EVALUATION PARAMETER EQUAL TO OR LARGER THAN PRIORITY THRESHOLD VALUE ?
YES
NO
COMPARE NORMALIZED EVALUATION PARAMETER
S217
S218
IS SWITCHING OPERATION SELECTED BASED ON COMPARISON RESULT ?
NO
YES
SELECT CONTINUATION OF COMMUNICATION IN SEQUENCE UNDER COMMUNICATION
S219
S220
SELECT SWITCHING OPERATION TO SEQUENCE UNDER DETECTION
RETURN

FIG. 8

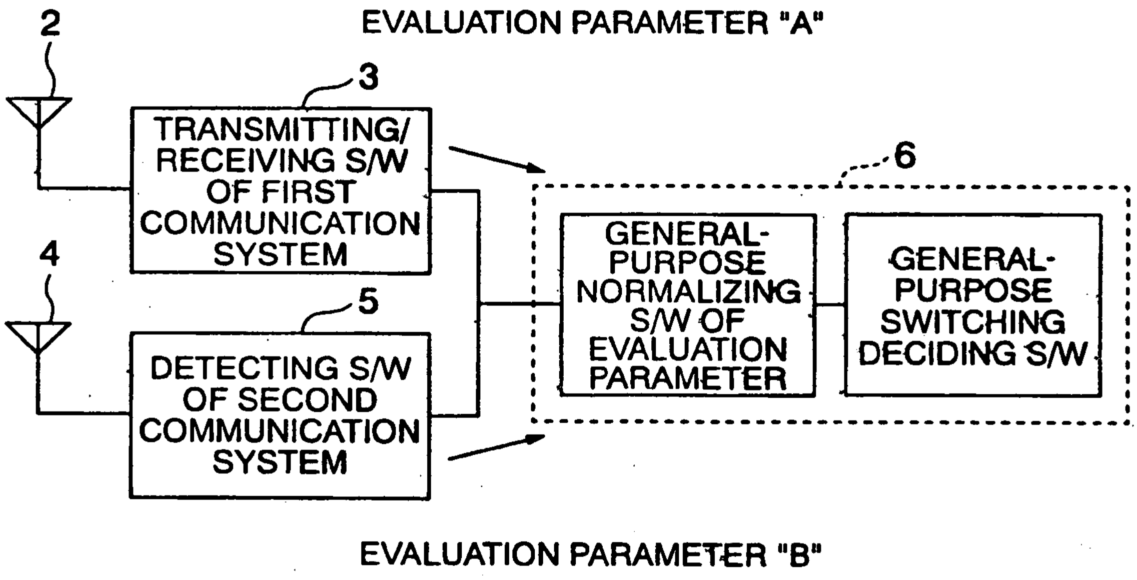
2
EVALUATION PARAMETER "A"
3
TRANSMITTING/ RECEIVING S/W OF FIRST COMMUNICATION SYSTEM
6
4
5
GENERAL-PURPOSE NORMALIZING S/W OF EVALUATION PARAMETER
GENERAL-PURPOSE SWITCHING DECIDING S/W
DETECTING S/W OF SECOND COMMUNICATION SYSTEM
EVALUATION PARAMETER "B"

FIG. 9

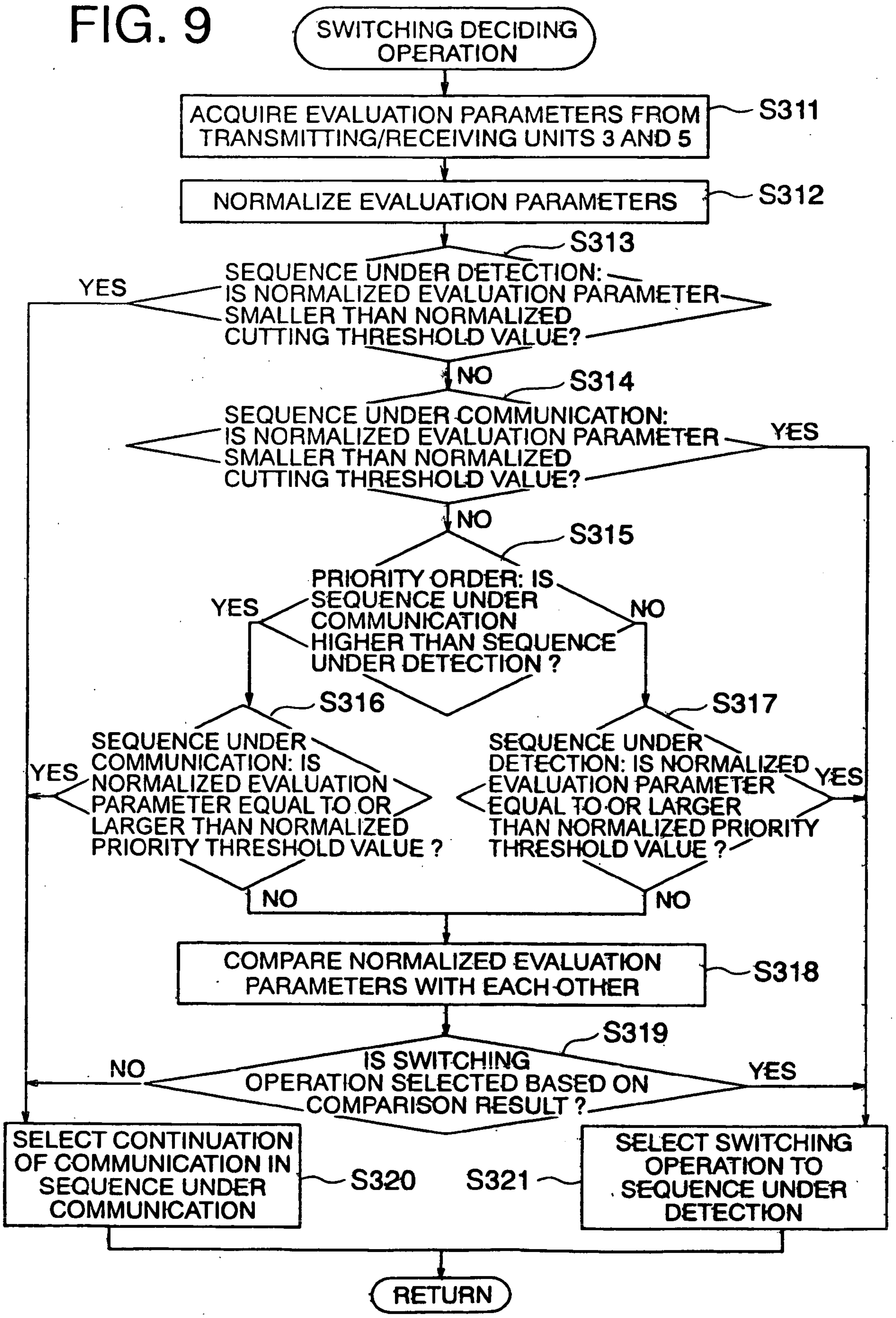
SWITCHING DECIDING OPERATION
ACQUIRE EVALUATION PARAMETERS FROM TRANSMITTING/RECEIVING UNITS 3 AND 5
S311
NORMALIZE EVALUATION PARAMETERS
S312
S313
SEQUENCE UNDER DETECTION: IS NORMALIZED EVALUATION PARAMETER SMALLER THAN NORMALIZED CUTTING THRESHOLD VALUE?
YES
NO
S314
SEQUENCE UNDER COMMUNICATION: IS NORMALIZED EVALUATION PARAMETER SMALLER THAN NORMALIZED CUTTING THRESHOLD VALUE?
YES
NO
S315
PRIORITY ORDER: IS SEQUENCE UNDER COMMUNICATION HIGHER THAN SEQUENCE UNDER DETECTION ?
YES
NO
S316
SEQUENCE UNDER COMMUNICATION: IS NORMALIZED EVALUATION PARAMETER EQUAL TO OR LARGER THAN NORMALIZED PRIORITY THRESHOLD VALUE ?
YES
NO
S317
SEQUENCE UNDER DETECTION: IS NORMALIZED EVALUATION PARAMETER EQUAL TO OR LARGER THAN NORMALIZED PRIORITY THRESHOLD VALUE ?
YES
NO
COMPARE NORMALIZED EVALUATION PARAMETERS WITH EACH OTHER
S318
S319
IS SWITCHING OPERATION SELECTED BASED ON COMPARISON RESULT ?
NO
YES
SELECT CONTINUATION OF COMMUNICATION IN SEQUENCE UNDER COMMUNICATION
S320
S321
SELECT SWITCHING OPERATION TO SEQUENCE UNDER DETECTION
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9121376 A
- JP 2003318765 A